# EUROPEAN PATENT SPECIFICATION

(11) **EP 4 699 843 B1**
(45) Date of publication and mention of the grant of the patent: **07.10.2026**
(21) Application number: 25185813.0
(22) Date of filing: 27.06.2025
(51) Int. Cl.: B60K 11/04

(54) **ALL-TERRAIN VEHICLE**
GELÄNDEFAHRZEUG
VÉHICULE TOUT TERRAIN

(30) Priority: 21.08.2024 CN 202411155109; 28.08.2024 CN 202411187986
(43) Date of publication of application: 25.02.2026
(73) Proprietor: Zhejiang CFMOTO Power Co., Ltd., Hangzhou, Zhejiang (CN)
(72) Inventor: FENG, Meilin, Hangzhou, Zhejiang Province (CN); LIU, Wanru, Hangzhou, Zhejiang Province (CN); HUANG, Yunqiang, Hangzhou, Zhejiang Province (CN); LUO, Longping, Hangzhou, Zhejiang Province (CN); GAO, Tiankai, Hangzhou, Zhejiang Province (CN)
(74) Representative: Sun, Yiming

(56) References cited:
- US-A1- 2019 210 668
- US-A1- 2020 164 940
- US-B2- 10 946 736
- US-B2- 8 196 689

## Description

### RELATED APPLICATION INFORMATION

The present application claims the benefits of priority to Chinese Patent Application No. 202411155109.2, filed with the Chinese Patent Office on August 21, 2024, and Chinese Patent Application No. 202411187986.8, filed with the Chinese Patent Office on August 28.

### FIELD OF THE DISCLOSURE

The present application relates to the field of vehicles, and particularly to an all-terrain vehicle.

### BACKGROUND OF THE DISCLOSURE

An all-terrain vehicle is a type of vehicle that can travel on any terrain, when an all-terrain vehicle passes through muddy roads, it generally has mud and other debris on it, A radiator of an all-terrain vehicle is mainly used to dissipate heat from the engine, if the radiator is not maintained and cleaned timely when it is blocked by muds, heat dissipation effect of the radiator may be reduced, which results in poor engine efficiency. In existing all-terrain vehicles, the radiator are generally fixed on all-terrain vehicles, and the radiator needs to be disassembled when the radiator needs to be repaired, the maintenance process is quite complicated. Document US10946736B2 discloses a all-terrain vehicle according to the preamble of claim 1.

### SUMMARY OF THE INVENTION

In order to address the shortcomings of existing vehicles, the purpose of this application is to provide an all-terrain vehicle with a radiator that is easy to maintain.

The present invention provides an all-terrain vehicles which achieve one or more of the above objectives.

In one aspect, an all-terrain vehicle includes a frame, a vehicle cover, a plurality of wheels, a prime mover assembly, a radiator assembly and an electrical assembly. The frame includes a main frame and a protective bracket positioned at least partially forward of the main frame. The vehicle cover includes a front cover plate positioned at least partially above the main frame, with an access port defined on the front cover plate. The plurality of wheels are positioned at least partially below the main frame. The prime mover assembly is at least partially and fixedly connected to the main frame, and the prime mover assembly is connected to the plurality of wheels in a transmission mode. The radiator assembly includes a radiator positioned at least partially above the front cover plate for dissipating heat from the prime mover assembly. The electrical assembly is positioned at the front of the all-terrain vehicle and fixedly connected to the main frame. The protective bracket includes an upper protective bracket connected to the main frame and positioned substantially above the front cover plate. The frame further includes a radiator bracket positioned at least partially above and rotatably connected to the upper protective bracket, and the radiator is fixedly connected to the radiator bracket. The radiator bracket has a stationary state and an adjustable state relative to the upper protective bracket; the radiator bracket is capable of rotating relative to the upper protective bracket when the radiator bracket is in the adjustable state; and the radiator bracket is stationary relative to the upper protective bracket when the radiator bracket is in the stationary state. The radiator assembly at least partially covers above the access port and the electrical assembly is positioned under access port. When viewed along the height direction of the all-terrain vehicle, projections of the electrical assembly, the access port, and the radiator assembly on the horizontal plane at least partially overlap with each other, and the radiator bracket is capable of rotating to facilitate the access to the electrical assembly.

Optionally, the radiator bracket includes a rotating end and a fixing end aligned along the height direction of the all-terrain vehicle, the upper protective bracket includes a connection portion rotatably connected to the rotating end of the radiator bracket, when viewed along the width direction of the all-terrain vehicle the rotating end overlaps with the connection portion; and the upper protective bracket further includes a fastener detachably connected to the fixing end.

Optionally, the fixing end of the radiator bracket defines a fixing hole, and the upper protective bracket defines a mounting hole, when the radiator bracket is in the stationary state and when viewed along the width direction of the all-terrain vehicle, the mounting hole overlaps with the fixing hole and the fastener is threaded through both the mounting hole and the fixing hole.

Optionally, the plurality of wheels includes a rear wheel positioned below the main frame, and a point where the rear wheel contacts with the ground is defined as a ground point, a plane passing through the ground point and perpendicular to a straight line passing through the ground point and a rotation center of the rear wheel is defined as a horizontal plane, the radiator extends along a predetermined plane, the radiator bracket further includes a limit device, the limit device is capable of rotating with the rotation of the radiator bracket until the limit device abuts against the connection portion; when the limit device abuts against the connection portion, the radiator bracket is in a maximum adjustable state, and the angle defined between the predetermined plane and the horizontal plane is a maximum adjustment angle, and the maximum adjustment angle is in the range from 90 degrees to 110 degrees.

Optionally, when the radiator bracket is stationary to the upper protective bracket, the radiator bracket has a first limit position and a second limit position, an angle defined between the predetermined plane and the horizontal plane is a first limit angle when the radiator bracket is in the first limit position, and the first limit angle is in the range from 30 degrees to 42 degrees.

Optionally, an angle defined between the predetermined plane and the horizontal plane is a second limit angle when the radiator bracket is in the second limit position, and the second limit angle is in the range from 54 degrees to 66 degrees.

Optionally, the difference between the first limit angle and the second limit angle is in the range from 12 degrees to 36 degrees.

Optionally, an adjustment groove is defined on the fixing end, and the upper protective bracket defines a mounting hole, the fastener at least partially passes through the adjustment groove and is fixedly received in the mounting hole, the mounting hole at least partially overlaps with the adjustment groove when viewed along an extension direction of the mounting hole.

Optionally, the adjustment groove is substantially arc-shaped, defining a longitudinal plane perpendicular to the width direction of the all-terrain vehicle, a projection of a rotation center of the radiator bracket projected along the width direction of the all-terrain vehicle on the longitudinal plane is defined as a rotation center projection, the center of an projection of the adjustment groove projected along the width direction of the all-terrain vehicle on the longitudinal plane overlaps with the rotation center projection.

Optionally, several limit portions uniformly distributed are defined in the adjustment groove, the limit portions abuts against the fasteners, the fasteners are positioned between adjacent limit portions, or the fasteners are positioned between the limit portion and the inner wall of the adjustment groove.

Optionally, the outer circumference of the fastener is designed as a gear, and the inner wall of the adjustment groove is designed as an arc-shaped rack, when the fastener passes through the adjustment groove and is fixedly received in the mounting hole, the gear on the fastener meshes with the tooth groove inside the adjustment groove.

Optionally, an adjustment knob and a fixing button are disposed on the fastener, and the gear on the fastener rotates with the rotation of the adjustment knob; the fixing button has a protruding state and a pressed state, when the fixing button is in the protruding state, both the adjustment knob and the gear on the fastener cannot rotate, when the fixing button is in the pressed state, the adjustment knob drives the gear on the fastener to rotate.

Optionally, the protective bracket includes a lower protective bracket fixedly connected to the main frame, and the upper protective bracket is rotatably connected to the lower protective bracket.

Optionally, when the radiator bracket is in the stationary state, the radiator covers the access port, and when the radiator bracket is in the maximum adjustable state, the access port is able to be directly seen along the height direction of the all-terrain vehicle.

Optionally, the radiator assembly further includes a radiator guard and an air intake grille positioned on the radiator guard, the radiator guard is fixedly connected to the radiator bracket, and the radiator guard and the air intake grille is capable of rotating together with the radiator bracket.

In another aspect, an all-terrain vehicle includes a frame, a vehicle cover, a plurality of wheels, a prime mover assembly, and a radiator assembly. The frame includes a main frame and a protective bracket positioned at least partially forward of the main frame. The vehicle cover includes a front cover plate positioned at least partially above the main frame. The plurality of wheels includes a pair of front wheels and a pair of rear wheels positioned at least partially below the main frame. The prime mover assembly is at least partially and fixedly connected to the main frame, and the prime mover assembly is connected to the front wheels and/or rear wheels in a transmission mode. The radiator assembly includes a radiator positioned at least partially above the front cover plate. The protective bracket includes an upper protective bracket and a lower protective bracket aligned along the height direction of the all-terrain vehicle, the upper protective bracket is positioned above the front cover plate, and the lower protective bracket is positioned forward of and fixedly connected to the main frame, the frame further includes a radiator bracket positioned above the front cover plate and fixedly connected to the upper protective bracket, and the radiator is fixedly connected to the radiator bracket; one end of the upper protective bracket is rotatably connected to the lower protective bracket, and a position of the other end of the upper protective frame relative to the main frame is adjustable.

Optionally, the upper protective bracket has a rotating connection portion positioned at the lower end of the upper protective bracket, and the lower protective bracket has a rotating portion positioned at the upper end of the lower protective bracket, the lower protective bracket further includes a rotating shaft passing through the rotating connection portion and the rotating portion.

Optionally, when viewed along the width direction of the all-terrain vehicle, the rotating connection portion overlaps the rotating portion, and the rotating shaft extends along the width direction of the all-terrain vehicle and passes through the rotating connection portion and the rotating portion.

Optionally, the upper protective bracket defines a connection hole positioned at the rear end of the upper protective bracket, and the upper protective bracket is fixedly connected to the main frame through the connection hole.

Optionally, the upper protective bracket has a stationary state and a adjustable state, the upper protective bracket is fixedly connected to the main frame through the connection hole in the stationary state; and the upper protective bracket is capable of rotating relative to the lower protective bracket in the adjustable state.

Optionally, the radiator extends along a second predetermined plane, a point where the rear wheel contacts with the ground is defined as a ground point, a plane including the ground point and perpendicular to a straight line including the ground point and a rotation center of the rear wheel is defined as a horizontal plane; when the upper protective bracket is in a maximum adjustable state, the angle between the second predetermined plane and the horizontal plane is a maximum adjustment angle, and the maximum adjustment angle is in the range from 90 degrees to 110 degrees.

Optionally, an access port is defined on the front cover plate, when the upper protective bracket is in the stationary state, the radiator covers the access port along the height direction of the all-terrain vehicle. when the upper protective bracket is in the maximum adjustable state, the access port can be directly seen.

The radiator of the above all-terrain vehicle can be adjusted between the first limit position and the second limit position, so that the radiator can match different driving conditions, thereby improving the working efficiency of the radiator.

### BRIEF DESCRIPTION OF THE DRAWINGS

FIG. 1 is a side view of an all-terrain vehicle in accordance with embodiments of the present application;
FIG. 2 is a rear view of an all-terrain vehicle in accordance with embodiments of the present application;
FIG. 3 is a rear view of a partial structure of the all-terrain vehicle in accordance with embodiments of the present application;
FIG. 4 is a schematic view of a first posture of the all-terrain vehicle provided in the embodiments of the present application;
FIG. 5 is a schematic view of a second posture of the all-terrain vehicle provided in the embodiments of the present application;
FIG. 6 is an enlarged partial view of part A in FIG. 5;
FIG. 7 is a front view of the all-terrain vehicle provided in the embodiments of the present application;
FIG. 8 is a top view of the all-terrain vehicle provided in the embodiments of the present application;
FIG. 9 is a schematic view of the structure of the radiator bracket and the upper protective bracket when the radiator bracket of the all-terrain vehicle provided in the present embodiment is in a stationary state;
FIG. 10 is a schematic view of the structure of the radiator bracket and the upper protective bracket when the radiator bracket of the all-terrain vehicle provided in the present embodiment is in an adjustable state;
FIG. 11 is a top view of the protective bracket, a support bracket, and a main frame of the all-terrain vehicle provided in the embodiments of the present application;
FIG. 12 is a schematic view of the structure of the radiator bracket and the upper protective bracket when the radiator assembly of the all-terrain vehicle provided in the present embodiment is in a first mount state;
FIG. 13 is a schematic view of the structure of the radiator assembly and the upper protective bracket when the radiator bracket of the all-terrain vehicle provided in the present embodiment is in a second mount state;
FIG. 14 is a schematic view of windward areas of the radiator at different angles of the all-terrain vehicle provided in the embodiments of the present application;
FIG. 15 is a schematic view of the structure of the radiator bracket and upper protective bracket in a second embodiment of the all-terrain vehicle provided in the present application;
FIG. 16 is a schematic view of the structure of the radiator bracket and upper protective bracket in the third embodiment of the all-terrain vehicle provided in the present application;
FIG. 17 is a schematic view of the structure of the upper protective bracket and radiator assembly of the all-terrain vehicle provided in the present embodiment when they are in an adjustable state;
FIG. 18 is a schematic view of the structure of the radiator assembly of the all-terrain vehicle provided in the embodiments of the present application;
FIG. 19 is an exploded view of an intake grille, a protective cover, radiator, and a filter cover of the all-terrain vehicle provided in the embodiments of the present application;
FIG. 20 is a side view of the structure of the all-terrain vehicle provided in the embodiments of the present application;
FIG. 21 is a front view of a winch assembly of the all-terrain vehicle in the overall vehicle layout provided in the embodiments;
FIG. 22 is a schematic view of the structure of the engine and transmission of the all-terrain vehicle provided in the embodiments of the present application;
FIG. 23 is a side view of a prime mover assembly of the all-terrain vehicle provided in the embodiments of the present application arranged throughout the vehicle;
FIG. 24 is a top view of a prime mover assembly of the all-terrain vehicle provided in the embodiments of the present application arranged throughout the vehicle;
FIG. 25 is a schematic view of an integrated arrangement of the CVT air inlet, CVT air outlet, and an air filter air inlet of the all-terrain vehicle provided in the embodiments of the present application;
FIG. 26 is a schematic view of the integrated arrangement of the CVT air inlet and air filter air inlet of the all-terrain vehicle provided in the embodiments of the present application;
FIG. 27 is a schematic view of the independent arrangement of the CVT air inlet, CVT air outlet, and an air filter air inlet of the all-terrain vehicle provided in the embodiments of the present application.

### DETAILED DESCRIPTION

For better understanding of the above objects, features and advantages of the present invention, embodiments of the present disclosure will be described in detail below with reference to the accompanying drawings.

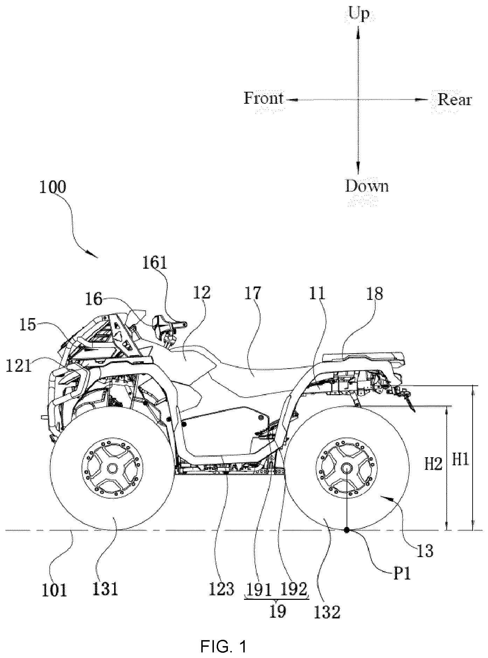

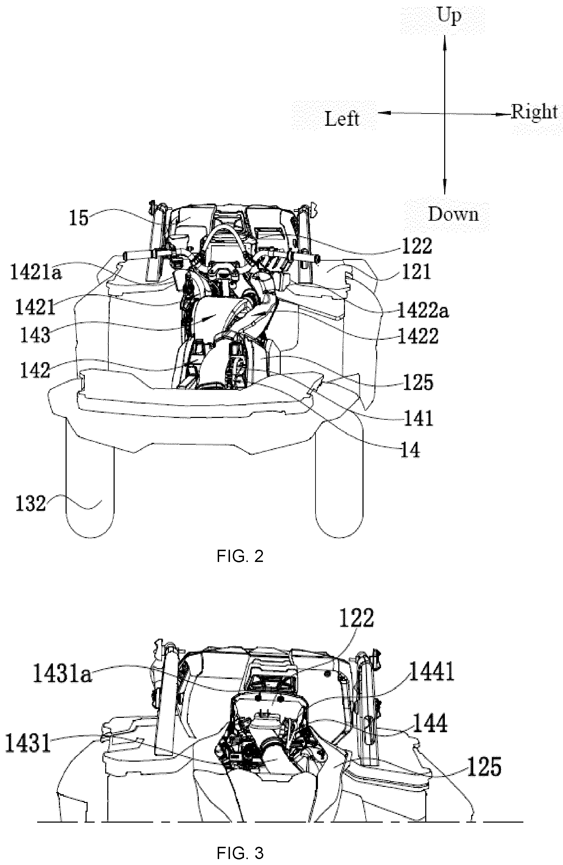

As shown in FIG. 1 and FIG. 2, an all-terrain vehicle 100 includes a frame 11, a vehicle cover 12, a plurality of wheels 13, and a prime mover assembly 14. The frame 11 serves as a basic structural support of the off-road vehicle 100 for carrying components of the all-terrain vehicle 100. The vehicle cover 12 is positioned at least partially on the frame 11, and is used to protect the internal components of the all-terrain vehicle 100. The vehicle cover 12 mainly refers to the plastic parts of the all-terrain vehicle 100. The plurality of wheels 13 is positioned at least partially below the frame 11, and includes a front wheel 131 positioned at the front of the all-terrain vehicle 100 and a rear wheel 132 positioned at the rear of the all-terrain vehicle 100. The prime mover assembly 14 is used to provide power to all-terrain vehicle 100 to drive the all-terrain vehicle 100 to move. The prime mover assembly 14 is connected to front wheel 131 and/or rear wheel 132 in a transmission mode. For better understanding the technical solution of the present application, the directions of front, rear, upper, and down are shown in FIG. 1, as well as the directions of left and right sides are as shown in FIG. 2. It should be noted that the length direction in embodiments of the application refers to a front-rear direction of the all-terrain vehicle 100, the width direction refers to a left-right direction of the all-terrain vehicle 100, and the height direction refers to the upper-down direction of the all-terrain vehicle 100.

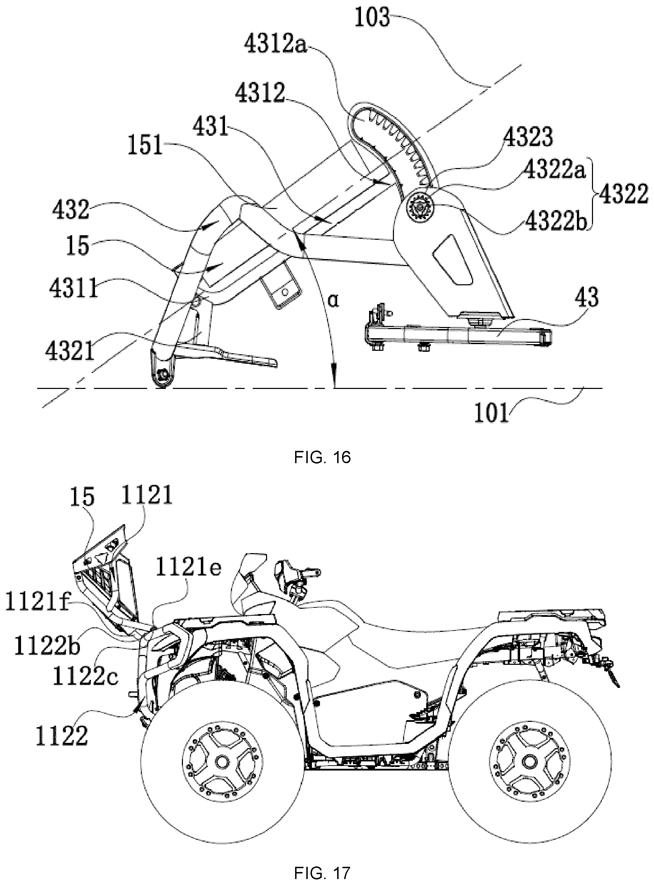

As shown in FIG. 1, the all-terrain vehicle 100 further includes a radiator assembly 15 positioned at the front of the all-terrain vehicle 100. The radiator assembly 15 includes a radiator 151 (refer to FIG. 17). The prime mover assembly 14 includes an engine 141. The radiator 151 is connected to the engine 141 through a pipeline filled with coolant, so that the heat generated by the operation of the engine 141 is transferred to the radiator 151 through the coolant in the pipeline, and the heat is transferred to the outside through the radiator 151, thereby achieving the heat dissipation of the engine 141. The existing radiator 151 is generally positioned at a position adjacent to the front of the all-terrain vehicle 100 along the length direction of the vehicle, and the radiator 151 is vertically arranged, the radiator 151 is positioned at a maximum windward area, which facilitates the heat dissipation of the radiator 151. However, this arrangement results in a lower wading height of the all-terrain vehicle 100. When the all-terrain vehicle 100 is driving on muddy or wading roads, the radiator 151 is prone to malfunction due to sediment accumulation.

As an embodiment, the vehicle cover 12 includes a front cover plate 121 positioned at the front of the all-terrain vehicle 100 and above the front wheels 131. The all-terrain vehicle 100 further includes a steering assembly 16, which includes a steering handle 161 positioned at an upper portion of the all-terrain vehicle 100 along the height direction of the all-terrain vehicle 100. The front cover plate 121 is further positioned forward of the steering handle 161. In order to ensure the all-terrain vehicle 100 can traverse deep mud and/or water conditions, the radiator assembly 15 of the present application is at least partially positioned above the front cover plate 121 and fixedly connected to the frame 11, and the radiator assembly 15 is further positioned forward of the steering handle 161. Further, the vehicle cover 12 further includes an instrument panel 122 for installing on-board instruments. The on-board instruments display status and driving information of the all-terrain vehicle 100. The instrument panel 122 is positioned at least partially forward of the steering assembly 16 and above the front cover plate 121, and the radiator assembly 15 is further positioned at least partially forward of the instrument panel 122. Therefore, the ground clearance height of the radiator assembly 15 is increased. When the all-terrain vehicle 100 traverses deep mud and/or water conditions, the radiator 151 does not pose a risk of mud blockage, thereby improving the trafficability of the all-terrain vehicle 100 on deep mud and/or water conditions.

As shown in FIG. 2, the prime mover assembly 14 further includes a transmission 142 connected to the engine 141 to change the speed of the engine 141, increase or decrease the torque of the engine 141, and enable the all-terrain vehicle 100 to obtain a more suitable power output mode for the usage scenario. The transmission 142 includes a transmission intake pipe 1421 and a transmission exhaust pipe 1422 to dissipate heat from the transmission 142. That is to say, air with lower temperature enters the interior of the transmission 142 through the transmission intake pipe 1421 and exchanges heat with the transmission 142 to become hot air. After the heat exchange is completed, the hot air is discharged through the transmission exhaust pipe 1422, thereby reducing the operating temperature of the transmission 142. The transmission intake pipe 1421 has a transmission inlet 1421a, and the transmission exhaust pipe 1422 has a transmission outlet 1422a. In embodiments of the present application, the transmission inlet 1421a and the transmission outlet 1422a are positioned rearward of the radiator assembly 15. The transmission inlet 1421a and the transmission outlet 1422a are further positioned at least partially rearward of the instrument panel 122. When viewed along the width direction of the all-terrain vehicle 100, the transmission inlet 1421a and the transmission outlet 1422a at least partially overlap the steering assembly 16. Therefore, positions of the transmission inlet 1421a and the transmission outlet 1422a can be raised to avoid being too close to the ground, thereby avoiding the risk of muds or water entering the transmission inlet 1421a and the transmission outlet 1422a and causing damage to the transmission 142 when the all-terrain vehicle 100 traverse deep mud or water conditions. This can improve the trafficability of the all-terrain vehicle 100.

As shown in FIG. 2 and FIG. 3, in the present embodiments, the prime mover assembly 14 further includes an air filter 143 at least partially positioned above the engine 141 and in fluid communication with the engine 141. The air filter 143 is mainly used to filter the air and deliver the filtered air to the engine 141 to assist in the normal operation of the engine 141. The air filter 143 includes an air filter intake pipe 1431 having an air filter inlet 1431a. The air filter inlet 1431a is positioned at least partially above the instrument panel 122, and is further positioned at least partially forward of the steering handle 161. In the present application, the steering assembly 16 is positioned rearward of the radiator assembly 15, and the air filter inlet 1431a is positioned between the radiator assembly 15 and the steering assembly 16, with the air filter inlet 1431a facing rearward of the all-terrain vehicle 100. That is to say, the air filter inlet 1431a faces substantially towards the steering assembly 16, so a position of the air filter inlet 1431a can be raised, which can avoid the engine 141 being damaged by water entering the air filter inlet 1431a when the all-terrain vehicle 100 traverses deep mud and/or water conditions. This can not only improve the trafficability of the all-terrain vehicle 100 traversing mud and/or water conditions, but also improve the safety of the all-terrain vehicle 100.

The prime mover assembly 14 further includes a ventilation pipe 144, to in fluid communicate the front axle and the rear axle of the all-terrain vehicle 100 with the outside world, and to balance the air pressure inside and outside the front axle and the rear axle by inhaling or discharging air. Optionally, the ventilation pipe 144 has an air vent 1441. In embodiments of the present application, one end of the ventilation pipe 144 is fixedly connected to the instrument panel 122, and the air vent 1441 is defined at the end of the ventilation pipe 144 adjacent to the instrument panel 122 to raise the air vent 1441 and prevent water flow from entering the ventilation pipe 144 through the air vent 1441 and from flowing towards the front axle and rear axles when the all-terrain vehicle 100 traverses deep mud and/or water conditions, thereby avoiding affecting the normal operation of the front axle and rear axle. This can improve the trafficability of the all-terrain vehicle 100 traversing mud and/or water conditions.

As shown in FIG. 1, in the embodiments of the present application, the all-terrain vehicle 100 further includes a saddle assembly 17 and a cargo box assembly 18. The saddle assembly 17 for carrying a driver is positioned at least partially above the engine 141 and the transmission 142. The cargo box assembly 18 is positioned behind the saddle assembly 17, and the cargo box assembly 18 is further positioned at least partially above the frame 11 and fixedly connected to the frame 11. When viewed along a width direction of the all-terrain vehicle 100, a point where the rear wheel 132 contacts with the ground is defined as a ground point P1. A plane passing through the ground point P1 and perpendicular to a straight line passing through the ground point P1 and a rotation center of the rear wheel is defined as a horizontal plane 101. It should be noted that according to the shape of the rear wheel 132, the tangent point between the rear wheel 132 and the ground is substantially the grounding point P1. When the air pressure of the rear wheel 132 is insufficient, there may be line contact between the rear wheel 132 and the ground, forming multiple grounding points P1, or when the ground is in a non-planar state, the grounding point P1 is the lowest point where the rear wheel 132 contacts the ground. A ratio of a minimum distance H1 between the cargo box assembly 18 and the horizontal plane 101 to a height H2 of the rear wheel is in the range from 0.95 to 1.4. In the present application, the ratio of a minimum distance H1 between the cargo box assembly 18 and the horizontal plane 101 to a height H2 of the rear wheel is 1.1. Therefore, the height of the cargo box assembly 18 can be raised, which can avoid water from entering into the cargo box assembly 18. Due to several electrical components being installed near the cargo box assembly 18, increasing the height of the cargo box assembly 18 can further raise the water wading height of the all-terrain vehicle 100. In addition, the driver can also shift the center of gravity of the driver's body backwards by sitting on the cargo box assembly 18 during the driving process, which is more conducive to the driver's control of the all-terrain vehicle 100.

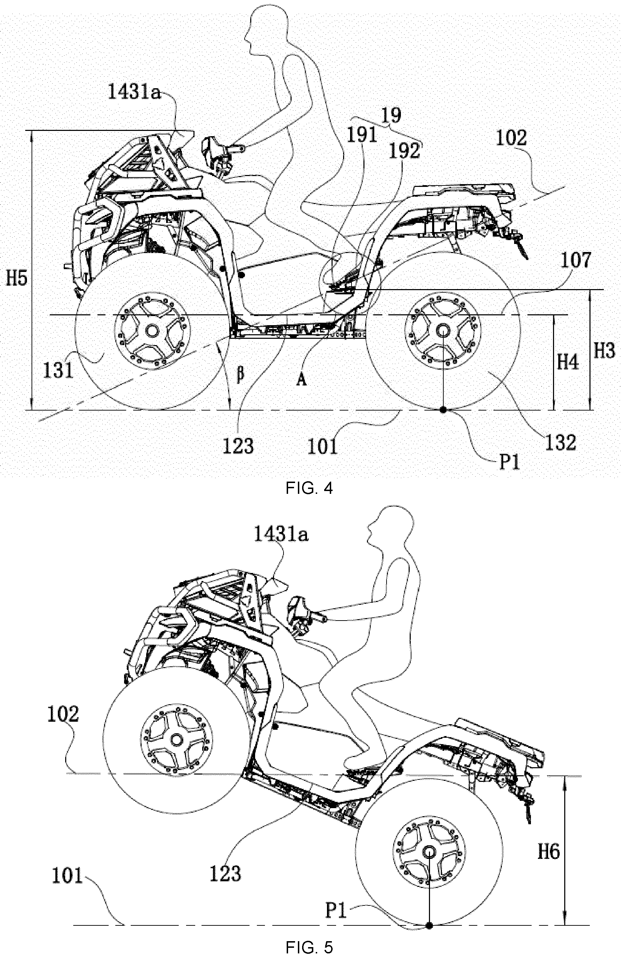

As shown in FIG. 4, the vehicle cover 12 further includes two foot pedals 123 positioned on either side of the engine 141 along the width direction of the all-terrain vehicle 100, respectively. The foot pedal 123 are used to support the driver's feet when the drive is in a normal riding posture. The all-terrain vehicle 100 further includes two foot hold assemblies 19 positioned behind the foot pedals 123. The foot hold assemblies 19 are used to support the driver's feet when the driver is in a special riding posture. The two foot hold assemblies 19 are positioned on either side of the all-terrain vehicle 100, respectively. A minimum distance H3 between the rear foot hold 191 and the horizontal plane 101 is greater than a minimum distance H4 between the foot pedal 123 and the horizontal plane 101. It should be noted that the driver may have two riding postures, a seated riding posture and a standing riding posture when driving the all-terrain vehicle 100. When the driver is in a seated riding posture, the driver sits on the saddle assembly 17 and steps on the foot pedal 123 with two feet. This riding posture is a commonly used riding posture (ie. a normal riding posture) for the driver driving the all-terrain vehicle 100. When the all-terrain vehicle 100 traverses deep mud and/or water conditions, the driver's sitting posture may easily cause the driver's feet to be submerged by the mud and/or water, resulting in a poor driving experience. At this point, the driver can switch to a standing riding posture. When in the standing riding posture, the driver steps on the foot holds 191, which can prevent the driver's feet from being submerged by the water and improve the driving experience. Further, during the all-terrain vehicle 100 clamps a slope, if the driver is in a seated riding posture, the driver is prone to danger due to the instability of the center of gravity caused by the backward tilt of the body. The standing riding posture can also make the driver's center of gravity more forward, thereby avoiding danger to the driver.

As shown in FIG. 4, FIG. 5, and FIG. 6, a foot hold bracket 192 is fixedly connected to the main frame 111 and extends outward in the width direction of the all-terrain vehicle 100. The rear foot hold 191 is arranged on the foot hold bracket 192, and the rear foot hold 191 is positioned above and fixedly connected to the foot hold bracket 192. The all-terrain vehicle 100 includes two foot hold brackets 192 and two rear foot holds 191. The vehicle cover 12 further includes two foot pedals 123. When viewed along the height direction of the all-terrain vehicle 100, the foot pedal 123 and the rear foot pedals 191 are arranged in any order from front to rear. The foot pedal 123 is positioned forward of the rear foot hold 191. When the driver rides in a seated position, the driver puts his/her feet on the foot pedal 123. The rear foot hold 191 is further positioned below the saddle assembly 17. The rear foot hold 191 is used to provide support for the driver's feet when the driver is in the standing riding posture. It should be noted that the term "outward" above refers to the foot hold bracket extending away from a longitudinal plane 105.

As an implementation method, when the driver is in a standing riding posture, the driver steps on the rear foot hold 191 and the driver's center of gravity tilts forward. In order to improve the wading depth of the driver's feet, a reference plane 102 is defined, and the rear foot hold 191 extends along the reference plane 102. It should be noted that, as shown in FIG. 4,

In embodiments of the present application, when both the front wheel 131 and the rear wheel 132 are positioned on the horizontal plane 101, an angle β defined between the reference plane 102 and the horizontal plane 101 is in the range from 15 degrees to 40 degrees. Preferably, the angle β is in the range from 22 degrees to 33 degrees. More preferably, the angle β is 27 degrees. Therefore, it can be avoided that the driver's feet not fit tightly with the rear foot hold 191 and avoid danger due to the angle β being too large or too small when in a standing riding posture. This can improve driving safety. In addition, the angle β is more in line with ergonomics, making the driver's stepping more comfortable, thereby improving driving comfort.

Optionally, a minimum distance between the rear foot hold 191 and the horizontal plane 101 is defined as a foot pedal height H3, and a minimum distance between the foot pedal 123 and the horizontal plane 101 is defined as a foot pedal height H4. The foot pedal height H3 is greater than the foot pedal height H4, so that the rear foot hold 191 can be positioned above the foot pedal 123. Therefore, when the all-terrain vehicle 100 passes through muddy and waterlogged roads, the driver can raise the position of the driver's feet by stepping on the rear foot hold 191, thereby avoiding the driver's feet from being submerged by water flow. When both the front wheels 131 and the rear wheels 132 are positioned on the horizontal plane 101, the minimum distance between the rear foot hold 191 and the horizontal plane 101 is in the range from 54 cm to 72 cm. In this application, the minimum distance between the rear foot hold 191 and the horizontal plane 101 is 60 cm. Further, in this application, the air filter inlet 1431a is positioned at the topmost of the all-terrain vehicle 100. Therefore, a distance between the topmost of the air filter inlet 1431a and the horizontal plane 101 is defined as a vehicle height H5, and the ratio of the pedal height H3 to the vehicle height H5 is in the range from 0.35 to 0.53. This not only avoids the pedal height H3 being too low and causing the driver's feet to be submerged by water when stepping on the rear foot hold 191, but also avoids the pedal height H3 being too high and inconvenient for the driver to step on the rear foot hold 191, thereby improving the human-machine interaction of the all-terrain vehicle 100.

In some embodiments, the all-terrain vehicle 100 includes a first state and a second state. When the all-terrain vehicle 10 is in the first state, then the front wheels 131 and the rear wheels 132 of the all-terrain vehicle 100 are both positioned on the horizontal plane 101. The foot pedal 123 substantially extends along a first predetermined plane 107. When the all-terrain vehicle 100 is in the first state, the first predetermined plane 107 is substantially parallel to the horizontal plane 101. The rear foot hold 191 substantially extends along a reference plane 102. When the all-terrain vehicle 100 is in the second state, the all-terrain vehicle 100 moves to a point where the reference plane 102 is substantially parallel to the horizontal plane 101. When the all-terrain vehicle 100 is in the second posture, a distance H6 between the reference plane 102 and the horizontal plane 101 is in the range from 67 cm to 83 cm. In this application, the distance H6 between the reference plane 102 and the horizontal plane 101 is 75 cm. Therefore, when the all-terrain vehicle 100 is in the second state, the distance H6 between the rear foot hold 191 and the horizontal plane 101 is greater than the foot pedal height H3 when the all-terrain vehicle 100 is in the first state. That is, when the all-terrain vehicle 100 is in the second state, the wading height is at its maximum, thereby further raising the wading height of the all-terrain vehicle 100. When the all-terrain vehicle 100 passes through the wading section, it avoids the driver's feet from wading, thereby improving the driver's driving experience. It should be noted that when the all-terrain vehicle 100 is in the first state, the driver can be in the sitting riding posture or standing riding posture mentioned above. When the all-terrain vehicle 100 is in the second state, the driver is in the standing riding posture. In addition, when the all-terrain vehicle 100 is in the second state, the driver can also ride in a special sitting position, that is, the cargo box assembly 18 can be used for the driver to ride as described above, which is more conducive to the driver's control of the all-terrain vehicle 100. It should be noted that a distance between a certain component on the all-terrain vehicle 100 and the horizontal plane 101 is a water wading height of that component. By raising the water wading height of multiple components, the water wading height of the entire vehicle can be raised.

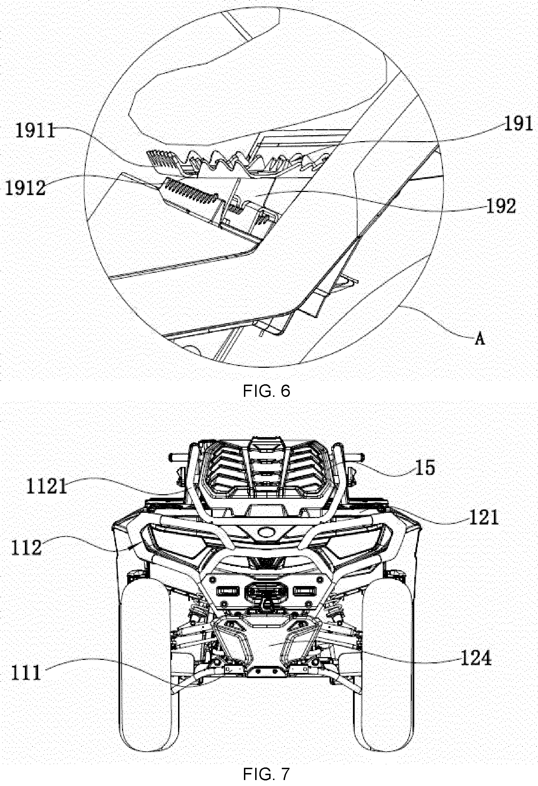

As shown in FIG. 6, in this embodiment, a plurality of anti-slip teeth 1911 are arranged on the rear foot hold 191. The anti-slip teeth 1911 protrude upward substantially along the height direction of the all-terrain vehicle 100, and can clamp the driver's shoe sole. When the driver is in the standing riding posture, they mainly maintain body stability through their hands and feet to avoid falling off the all-terrain vehicle 100. The anti-slip teeth 1911 can avoid danger due to driver's feet slipping off the rear foot holds 191. Further, the rear foot hold 191 defines a plurality of weight reduction holes 1912 between adjacent anti-slip teeth 1911. The design of the weight reduction hole 1912 can not only reduce the weight of the rear foot hold 191, but also allow the mud or mud splashed onto the rear foot hold 191 during the driving process of the all-terrain vehicle 100 to be quickly discharged from the weight reduction hole 1912, thereby avoiding sediment accumulation on the rear foot hold 191. It should be noted that sediment accumulation can easily cause the rear foot hold 191 to become slippery, which is not conducive to the driver stepping on the rear foot hold 191. In this application, anti-slip teeth 1911 are used to reduce the contact between the driver's feet and sediment, and the sediment is quickly discharged through weight reducing holes 1912, thereby improving the stability of the driver stepping on the rear foot hold 191 and enhancing the driver's driving safety.

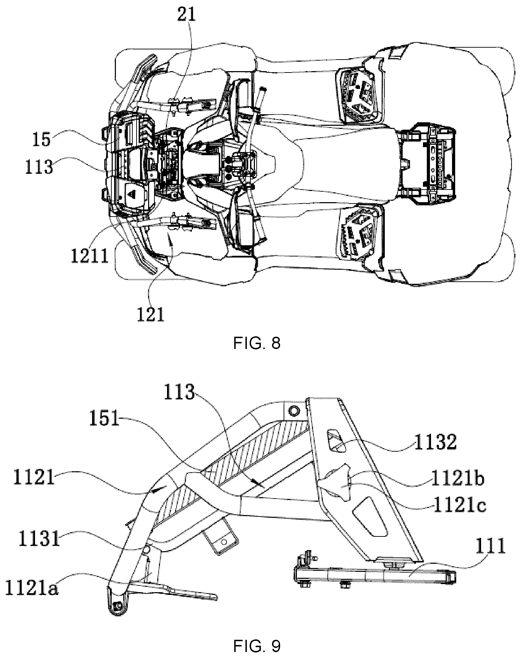

As shown in FIG. 7 and FIG. 8, the frame 11 includes a main frame 111 and a protective bracket 112 positioned forward of the main frame 111. The protective bracket 112 is fixedly connected to the main frame 111 and is mainly used to withstand impact loads. That is, in the event of a collision accident of the all-terrain vehicle 100, the protective bracket 112 absorbs the impact through its own deformation to reduce the impact load transmitted to the driver and avoid harm to the driver caused by the collision accident of the all-terrain vehicle 100. The protective bracket 112 includes an upper protective bracket 1121 at least partially positioned above the front cover plate 121 and fixedly connected to the main frame 111. The frame 11 further includes a radiator bracket 113, as shown in FIG. 9, the radiator 151 is mounted on the radiator bracket 113, and the radiator bracket 113 is positioned at least partially on the upper protective bracket 1121 and connected to the protective bracket 112. The upper protective bracket 1121 is at least partially around the radiator bracket 113. Along the width direction of the all-terrain vehicle 100, the upper protective bracket 1121 is positioned at least partially on two sides of the radiator bracket 113. The upper protective bracket 1121 is mainly used to mount the radiator bracket 113 and provide protection for the radiator 151, avoiding damage to the radiator 151 in the event of a collision with the all-terrain vehicle 100. As shown in FIG. 9, optionally, one end of the radiator bracket 113 is rotatably connected to the upper protective bracket 1121, and the other end of the radiator bracket 113 is adjustable relative to the upper protective bracket 1121. Optionally, the radiator bracket 113 and the upper protective bracket 1121 are connected by a rotating shaft positioned at the front end of the radiator bracket 113. The rotating shaft extends along the width direction of the all-terrain vehicle 100 and sequentially passes through the upper protective bracket 1121 and the radiator bracket 113, so that the radiator bracket 113 can rotate relative to the upper protective bracket 1121 through the rotating shaft, thereby driving the radiator 151 to rotate. As shown in FIG. 8, the all-terrain vehicle 100 further includes an electrical assembly 21, which includes components such as a vehicle controller and a fuse box. In this application, the vehicle controller and fuse box are both positioned at the front of the all-terrain vehicle 100 and fixedly connected to the main frame 111. The vehicle controller and the fuse box are positioned forward of the steering handle 161 and below the front cover plate 121. The vehicle controller referred to in this application refers to an ECU (Electronic Control Unit) controller. In order to facilitate maintenance in the event of a malfunction in the vehicle controller and the fuse box, an access port 1211 is defined on the front cover plate 121. The vehicle controller and the fuse box are positioned under the access port 1211, and the radiator assembly 15 at least partially covers above the access port 1211. When viewed along the height direction of the all-terrain vehicle 100, projections of the electrical assembly 21, the access port 1211, and the radiator assembly 15 on the horizontal plane at least partially overlap with each other. Further, when the all-terrain vehicle 100 needs to drive for a long time on muddy or waterlogged roads, it is necessary to regularly inspect and maintain the radiator assembly 15 to avoid damage to the engine 141 due to excessive temperature caused by the malfunction of the radiator assembly 15. The radiator bracket 113 in the present application has a stationary state and an adjustable state. When the radiator bracket 113 is in the stationary state, it is relatively fixed to the upper protective bracket 1121, that is, the radiator bracket 113 and the upper protective bracket 1121 are in a relatively stationary state, and the rotation between the radiator bracket 113 and the upper protective bracket 1121 is restricted. When the radiator bracket 113 is in the adjustable state, the radiator bracket 113 can rotate relative to the upper protective bracket 1121 around the rotation axis, thereby driving the radiator 151 to rotate.

As shown in FIG. 9, optionally, the radiator bracket 113 includes a rotating end 1131 and a fixing end 1132 arranged along the height direction of the all-terrain vehicle 100. The fixing end 1132 is at least partially positioned above the rotating end 1131, and the rotating end 1131 is rotatably connected to the upper protective bracket 1121. The fixing end 1132 is detachably connected to the upper protective bracket 1121, so that the radiator 151 can rotate with the radiator bracket 113 relative to the upper protective bracket 1121 through the relative rotation of the rotating end 1131 and the upper protective bracket 1121, thereby achieving the adjustment function of the radiator 151. Therefore, the radiator assembly 15 is mounted on the front cover plate 121. While raising the water wading height of the all-terrain vehicle 100, the electrical assembly 21 of the all-terrain vehicle 100 can also be repaired by rotating the radiator bracket 113, thereby facilitating the maintenance of the all-terrain vehicle 100. It should be noted that after the all-terrain vehicle 100 traverses mud and/or water conditions, the radiator bracket 113 can be switched to the adjustable state, and the front and rear portions of the radiator 151 can also be cleaned and maintained to avoid the blockage of the radiator 151 due to long-term uncleaning, which can improve the service life of the radiator 151.

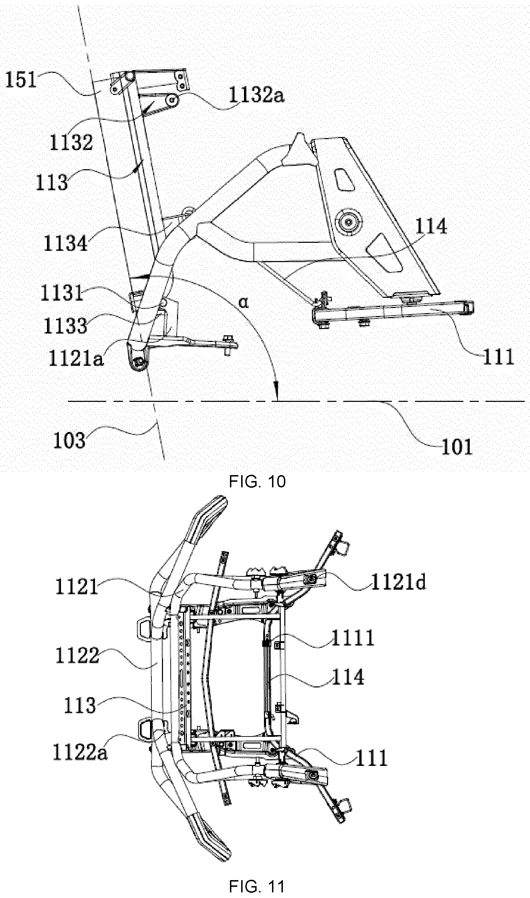

As shown in FIG. 9 and FIG. 10, further, the upper protective bracket 1121 includes a connection portion 1121a and a mounting hole 1121b. When the radiator bracket 113 is in a stationary state, the connection portion 1121a is positioned under the mounting hole 1121b, and at least partially forward of the mounting hole 1121b. The rotating end 1131 is rotatably connected to the connection portion 1121a. The rotating end 1131 and the connection portion 1121a overlap along the width direction of the all-terrain vehicle 100, and the rotating shaft passes through the rotating end 1131 and the connection portion 1121a in sequence, so that the rotating end 1131 can rotate relative to the connection portion 1121a through the rotating shaft. The upper protective bracket 112 further includes a fastener 1121c, which are mounted through the mounting hole 1121b and fixedly connected to the fixing end 1132. When the radiator bracket 113 is in a stationary state, the fastener 1121c are fixedly connected to the fixing end 1132 to restrict the rotation of the radiator bracket 113.

Optionally, the fixing end 1132 includes a fixing hole 1132a. When the mounting hole 1121b is connected to the connection portion 1121a, the fixing hole 1132a and the mounting hole 1121b overlap along the width direction of the all-terrain vehicle 100, and the fastener 1121c is connected to the fixing hole 1132a after passing through the mounting hole 1121b, so that the radiator bracket 113 and the upper protective bracket 1121 are relatively fixed, thereby fixing the radiator 151 in a stationary state. Therefore, the radiator 151 can achieve an adjustment function of the radiator 151 by the relative rotation between the rotating end 1131 and the connection portion 1121a on the radiator bracket 113. The fixing hole 1132a and the mounting hole 1121b can be relatively fixed by the fastener 1121c, thereby avoiding safety hazards caused by the rotation of the rotating end 1131 relative to the connection portion 1121a during the driving of the all-terrain vehicle 100, and improving the connection stability of the radiator bracket 113, thereby enhancing the driving safety of the all-terrain vehicle 100.

It should be noted that the all-terrain vehicle 100 includes two connection portions 1121a and two rotating ends 1131, and the two connection portions 1121a and the two rotating ends 1131 are arranged along the width direction of the all-terrain vehicle 100. The rotating shaft passes through two connection portions 1121a and two rotating ends 1131. Optionally, the two connection portions 1121a are positioned on the left and right sides of the upper protective bracket 1121, respectively and the two rotating ends 1131 are positioned on left and right sides of the radiator bracket 113. This arrangement makes the rotational connection between the radiator bracket 113 and the radiator 151 more stable. Optionally, the all-terrain vehicle 100 includes two fixing ends 1132 and two fasteners 1121c, and both fixing ends 1132 and two fasteners 1121c are arranged along the width direction of the all-terrain vehicle 100. The two fixing ends 1132 are positioned substantially on two sides of the radiator bracket 113, and the two fasteners 1121c are positioned substantially on two sides of the upper protective bracket 1121. Therefore, when the radiator 151 is in a stationary state, the radiator bracket 113 is connected to the upper protective bracket 1121 through four mount points, which can improve the stability of the connection between the radiator bracket 113 and the upper protective bracket 1121, as well as the rotational stability of the radiator bracket 113 relative to the upper protective bracket 1121, making the rotation of the radiator bracket 113 more stable.

As shown in FIG. 10, when the radiator bracket 113 is in the adjustable state, the radiator bracket 113 is only connected to the connection portion 1121a through the rotating end 1131, and is not fixed relative to the upper protective bracket 1121. At this time, by manually applying external force, the radiator bracket 113 can drive the radiator 151 to rotate. The radiator 151 extends along a second predetermined plane 103. An angle α is defined between the second predetermined plane 103 and the horizontal plane 101. In the present application, the angle α may directly affect the air intake of the radiator 151. Optionally, during the rotation of the radiator bracket 113 in the adjustable state, the radiator bracket 113 has a maximum adjustable state. When the radiator bracket 113 is in the maximum adjustable state, the angle α is defined as a maximum adjustment angle, the maximum adjustment angle is in the range from 90 degrees to 110 degrees. In some embodiments, the maximum adjustment angle is 100 degrees. Further, the radiator bracket 113 further includes a limit device 1133, which is arranged forward of the rotating end 1131. Therefore, during the rotation of the radiator bracket 113, the limit device 1133 can follow the rotation of the radiator bracket 113 until it contacts the connection portion 1121a, thereby avoiding excessive rotation of the radiator bracket 113. When the limit device 1133 contacts the connection portion 1121a, the radiator bracket 113 is in the maximum adjustable state. At this time, when viewed along the height direction of the all-terrain vehicle 100, at least a portion of electrical assembly 21 is able to be seen through the access port 1211. Therefore, this can avoid the maximum adjustment angle too small, which is not conducive to the maintenance of electrical assembly 21 or the radiator 151 by maintenance personnel, and to avoid the maximum adjustment angle too large, which may cause the pipeline between radiator 151 and engine 141 to be too long, which is not conducive to the layout of the pipeline.

It should be noted that when the radiator bracket 113 switches from the stationary state to the adjustable state, the first step is to remove the fastener 1121c to disconnect the fixing end 1132 from the upper protective bracket 1121, and apply external force to rotate the rotating end 1131 relative to the connection portion 1121a, so that the radiator bracket 113 rotates forward or backward with the connection portion 1121a as a rotation center until the limit device 1133 comes into contact with the connection portion 1121a. At this time, the radiator bracket 113 is in the maximum adjustable state, and the driver and maintenance personnel can carry out maintenance on the all-terrain vehicle 100.

When the radiator bracket 113 is in the maximum adjustable state, the driver or maintenance personnel need to clean and maintain two sides of the radiator 151, as well as inspect the vehicle controller and fuse box through the access port 1211. Optionally, the frame 11 further includes a support bracket 114 arranged on the main frame 111. The support bracket 114 is substantially rod-shaped, and one end of the support bracket 114 is rotatably connected to the main frame 111. The radiator bracket 113 has a support fixing portion 1134 that cooperates with the support bracket 114. When the radiator bracket 113 is in the maximum adjustable state, rotate the support bracket 114 and clamp the end of the support bracket 114 away from its rotation center with the support fixing portion 1134, thereby fixing the radiator bracket 113 in the maximum adjustable state. This can ensure that the radiator bracket 113 does not flip backwards, which may affect maintenance or cause damage to the radiator bracket 113 during the maintenance process. At this point, when viewed along the width direction of the all-terrain vehicle 100, the radiator bracket 113, the support bracket 114, and main frame 111 cooperatively define a triangular structure, which can stabilize the radiator bracket 113 in an adjusted state. When the maintenance of the all-terrain vehicle 100 is completed, it is necessary to switch the radiator bracket 113 from the adjustable state to the stationary state. At this time, the support bracket 114 needs to be stored firstly. Further, as shown in FIG. 8, a clamping portion 1111 for cooperating with the support bracket 114 is arranged on the main frame 111. The support bracket 114 is released from the clamping state with the support fastener 1134 and can be clamped with the clamping portion 1111 after rotation, so that the support bracket 114 can be relatively fixed to avoid shaking during the driving of the all-terrain vehicle 100. When the support bracket 114 is clamped with the clamping portion 1111, the support bracket 114 substantially extends along the width direction of the all-terrain vehicle 100. Therefore, the support bracket 114 enables the radiator bracket 113 to be stably in an adjustable state, avoiding the risk of the radiator bracket 113 flipping backwards under its own gravity and hitting maintenance personnel, thereby facilitating maintenance of the all-terrain vehicle 100 by maintenance personnel.

As shown in FIG. 11, the protective bracket 112 further includes a lower protective bracket 1122. The lower protective bracket 1122 is below the upper protective bracket 1121, and both the upper protective bracket 1121 and the lower protective bracket 1122 are fixedly connected to the main frame 111. The upper protective bracket 1121 is further positioned above and detachably connected to the lower protective bracket 1122 by bolts. The lower protective bracket 1122 is further at least partially positioned forward of the main frame 111. As the lower protective bracket 1122 is positioned at the front of the all-terrain vehicle 100, so the lower protective bracket 1122 is the main component that bears impact loads. Therefore, the upper protective bracket 1121 is separable from the lower protective bracket 1122, which allows the lower protective bracket 1122 to receive most of the impact while reducing the impact load transmitted to the upper protective bracket 1121, thereby avoiding damage to the radiator 151. In addition, when repairing the damaged upper protective bracket 1121 or lower protective bracket 1122, the upper protective bracket 1121 or lower protective bracket 1122 can be separately replaced and maintained, thereby avoiding the need to remove the entire protective bracket 112 for maintenance and replacement, and thus reducing the maintenance cost of the all-terrain vehicle 100. In addition, during the transportation of the all-terrain vehicle 100, the upper protective bracket 1121 and the lower protective bracket 1122 allows for separate disassembly and transportation, thereby reducing the difficulty of packaging the entire vehicle during transportation and improving the convenience of transporting the all-terrain vehicle 100.

Further, the lower protective bracket 1122 includes an installation portion 1122a. When viewed along the height direction of the all-terrain vehicle, the installation portion at least partially overlaps the upper protective bracket. The upper protective bracket 1121 is bolted to the installation portion 1122a, thereby forming a detachable connection between the upper protective bracket 1121 and the lower protective bracket 1122. The vehicle cover 12 further includes a protective plate 124 (refer to FIG. 7) fixedly connected to the lower protective bracket 1122. The protective plate 124 is at least partially positioned below and forward of the lower protective bracket 1122. As the all-terrain vehicle 100 often travels on sandy and gravel roads, the protective plate 124 can protect the electrical components 21 positioned at the front of the all-terrain vehicle 100 from damage due to sand and gravel splashing. Furthermore, the protective plate 124 can be made of metal material, which can improve the structural strength of the protective plate 124 and avoid damage to the protective plate 124 itself. The upper protective bracket 1121 includes a connection hole 1121d positioned at the rear of the upper protective bracket 1121. The upper protective bracket 1121 is fixedly connected to the main frame 111 through the connection hole 1121d, thereby achieving a fixed connection between the upper protective bracket 1121 and the main frame 111.

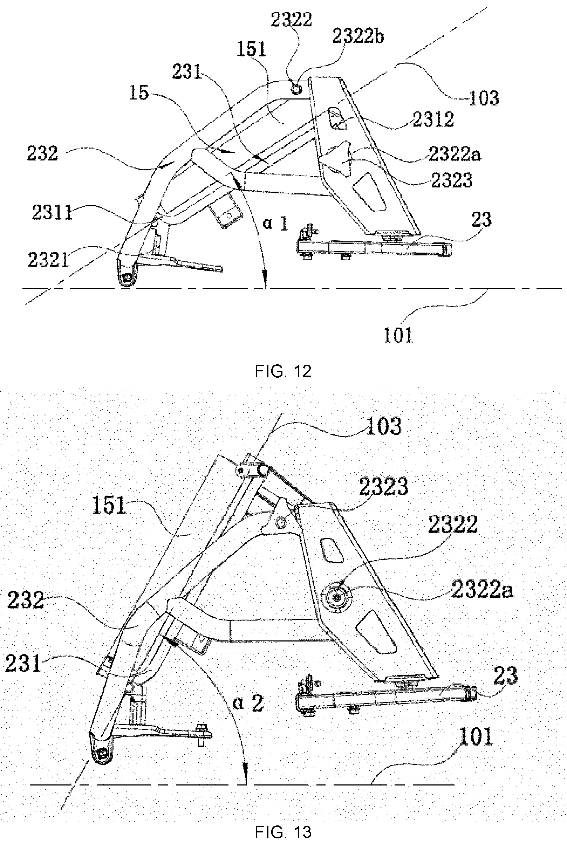

Referring to FIG. 12 and FIG. 13, in addition to the ability to flip the radiator bracket 113, the radiator bracket 113 also has the function of angle adjustment. That is, during the flipping process, the radiator bracket 113 has multiple angles connected to the upper protective bracket 1121, which can switch the radiator bracket 113 to a stationary state at different angles. Optionally, when the radiator bracket 113 is in a stationary state, a first limit position and a second limit position are defined between the radiator bracket 113 and the upper protective bracket 1121. When the radiator bracket 113 is in the first limit position, an angle α1 between the second predetermined plane 103 and the horizontal plane 101 is a first limit angle. When the radiator bracket 113 is in the second limit position, an angle α2 between the second predetermined plane 103 and the horizontal plane 101 is a second limit angle. The difference between the first limit angle and the second limit angle is 12 degrees to 36 degrees. The first limit angle is in the range from 30 degrees to 42 degrees, and the second limit angle is in the range from 54 degrees to 66 degrees. In this embodiment, the first limit angle is 36 degrees, the second limit angle is 60 degrees, and the difference between the first limit angle and the second limit angle is 24 degrees. Therefore, the angle between the second predetermined plane 103 and the horizontal plane 101 can be adjusted between the first limit angle and the second limit angle, thereby changing the intake air volume of the radiator 151 and adjusting the angle of the radiator bracket 113 according to the actual needs of the driver, thereby improving the driving experience of the driver. Optionally, the angle adjustment structure of the radiator bracket 113 will be described by examples.

As shown in FIG. 12 and FIG. 13, as a first embodiment, an all-terrain vehicle includes a frame 23 and a radiator assembly 15 substantially the same as described above. The radiator assembly 15 includes a radiator 151, and the frame 23 includes a radiator bracket 231 and an upper protective bracket 232. The radiator bracket 231 includes a fixing end 2312 and a rotating end 2311, and the upper protective bracket 232 includes a connection portion 2321 rotatably connected to the rotating end 2311. Optionally, mounting holes 2322 passing through the upper protective bracket 232 along the width direction of the all-terrain vehicle 100 is defined on the upper protective bracket 232. The mounting holes 2322 include a first mounting hole 2322a and a second mounting hole 2322b at least partially vertically aligned. A fixing hole 2312a (also refer to 1132a in FIG. 10) is defined at the fixing end 2312, and a fastener 2323 is arranged on the upper protective bracket 232. When the fixing end 2312 of the radiator bracket 231 is in a stationary state with the upper protective bracket 232, and the rotating end 2311 of the radiator bracket 231 rotates relative to the connection portion 2321 of the upper protective bracket 232, the fixing hole 2312a can rotate to overlap with the first mounting hole 2322a or the second mounting hole 2322b along the width direction of the all-terrain vehicle 100, respectively. When the fixing hole 2312a overlaps with the first mounting hole 2322a or the fixing hole 2312a overlaps with the second mounting hole 2322b, the fastener 2323 is inserted through the first mounting hole 2322a or the second mounting hole 2322b and fixedly received in the fixing hole 2312a. At this time, the radiator bracket 231 is fixedly received in the upper protective bracket 1121. It should be noted that when the fastener 2323 is fixedly received in the fixing hole 2312a through the first mounting hole 2322a, the radiator bracket 231 is in the first limit position. When the fastener 2323 is fixedly received in the fixing hole 2312a through the second mounting hole 2322b, the radiator bracket 231 is in the second limit position.

As shown in FIG. 12 and FIG. 13, in some embodiments, the radiator bracket 231 can adjust the angle of the radiator 151 by being fixedly received in the first mounting hole 2322a and the second mounting hole 2322b, respectively. Due to the different heights of the first mounting hole 2322a and the second mounting hole 2322b, the angles defined between the second predetermined plane 103 and the horizontal plane 101 are different. When the fastener 2323 is fixedly received in the fixing hole 2312a through the first mounting hole 2322a, the angle α1 between the second predetermined plane 103 and the horizontal plane 101 is in the range from 30 degrees to 42 degrees. In some embodiments, the angle α1 defined between the second predetermined plane 103 and the horizontal plane 101 is 36 degrees, and the radiator bracket 231 is at the first limit angle. When the fastener 2323 is fixedly received in the fixing hole 2312a through the second mounting hole 2322b, the angle α2 defined between the second predetermined plane 103 and the horizontal plane 101 is in the range from 54 degrees to 66 degrees. In some embodiments, when the angle α2 defined between the second predetermined plane 103 and the horizontal plane 101 is 60 degrees, then the radiator bracket 231 is at the second limit angle. It should be noted that the all-terrain vehicle 100 has a low-speed mode and a high-speed mode. When the all-terrain vehicle 100 is in high-speed mode, the engine needs to output more power and dissipate more heat during operation. In this embodiment, when the all-terrain vehicle 100 is in the high-speed mode, the radiator bracket 231 is in the second limit position, and when the all-terrain vehicle 100 is in the low-speed mode, the radiator bracket 231 is in the first limit position. It should be noted that when the radiator bracket 231 is in the second limit position, the air intake of the radiator 151 is greater than that of the radiator 151 when the radiator bracket 231 is in the first limit position, so that when the all-terrain vehicle 100 is in the high-speed mode, the radiator 151 can improve its heat dissipation effect by increasing the air intake, so that the engine temperature is within the suitable temperature range.

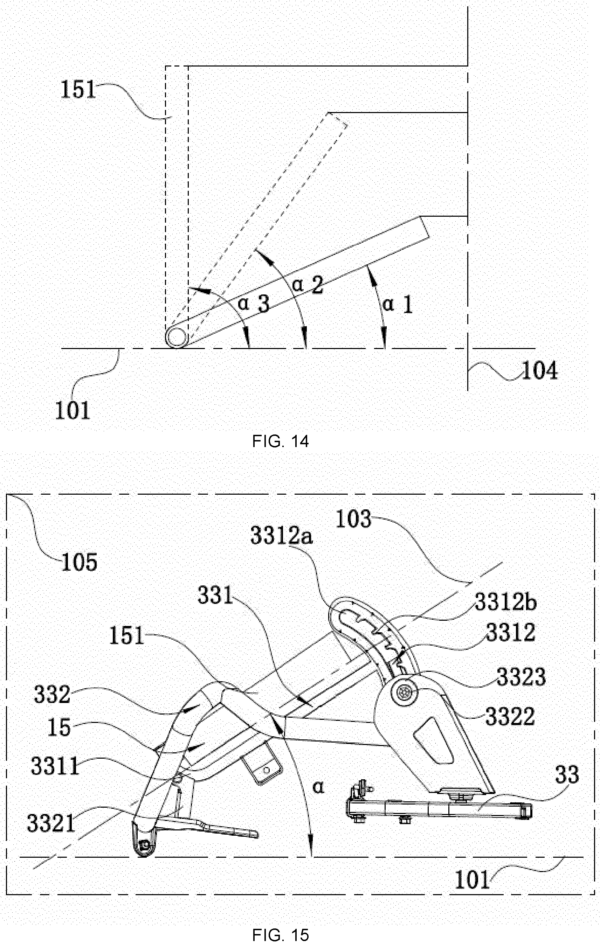

As shown in FIG. 14, optionally, a laterally extending plane 104 perpendicular to the length direction of the all-terrain vehicle 100 is defined. When the angle α3 defined between the second predetermined plane 103 and the horizontal plane 101 is 90 degrees, the radiator 151 is in an upright state. At this point, a projection of the radiator 151 along the length direction of the all-terrain vehicle 100 on the laterally extending plane 104 is defined as a radiator projection, and an area of the radiator projection is a radiator 151 area, which is also a maximum air intake area of the radiator 151. When the radiator bracket 231 is in the first limit position, the projection of the radiator 151 along the length direction of the all-terrain vehicle 100 on the laterally extending plane 104 is defined as a first projection. The area of the first projection is the air intake area of the radiator 151 when the radiator bracket 231 is in the first limit position. When the radiator bracket 231 is in the second limit position, the projection of the radiator 151 along the length direction of the all-terrain vehicle 100 on the laterally extending plane 104 is defined as a second projection. The area of the second projection is the air intake area of the radiator 151 when the radiator bracket 231 is in the second limit position. The area of the second projection is larger than that of the first projection, indicating that when the radiator bracket 231 is in the second limit position, the radiator 151 can obtain a larger air intake volume, thereby improving the heat dissipation effect of the radiator 151. Therefore, the setting of the angle α can not only avoid the radiator 151 from blocking the driver's line of sight when the radiator bracket 231 is in the first or second limit position, but also avoid the radiator 151 from not being able to obtain the intake air volume that matches the current speed mode due to the angle α being too small, resulting in poor working efficiency of the radiator 151. Therefore, while meeting the working requirements of the radiator 151, it can also avoid the position of the radiator 151 being too high and affecting the driver's observation of road conditions, thereby improving the driving safety of the all-terrain vehicle 100.

As shown in FIG. 15, as a second embodiment, the all-terrain vehicle 100 includes a frame 33 and a radiator assembly 15, and the radiator assembly 15 includes a radiator 151, and the frame 33 includes a radiator bracket 331 and an upper protective bracket 332, which are substantially the same as the first embodiment. The content that differs from the first embodiment is described below.

As shown in FIG. 15, the radiator bracket 331 includes a rotating end 3311 and a fixing end 3312 vertically aligned. The upper protective bracket 332 includes a connection portion 3321, and the rotating end 3311 is rotatably connected to the connection portion 3321. The fixing end 3312 is detachably connected to the upper protective bracket 332. Optionally, an adjustment groove 3312a is defined at the fixing end 3312. The upper protective bracket 332 further includes a fastener 3322 and a mounting hole 3323. The fastener 3322 at least partially passes through the adjustment groove 3312a and is fixedly received in the mounting hole 3323, so that the fixing end 3312 is fixedly connected to the upper protective bracket 332. It should be noted that when the radiator bracket 331 rotates relative to the upper protective bracket 332, the adjustment groove 3312a also rotates synchronously with the radiator bracket 331. When the adjustment groove 3312a rotates to any position within the predetermined rotation range, when viewed along the extension direction of the mounting hole 3323, the mounting hole 3323 at least partially overlaps the adjustment groove 3312a, that is, the adjustment groove 3312a rotates to any position within the predetermined rotation range. The fastener 3322 can be fitted with an adjusting groove 3312a and fixedly received in the mounting hole 3323. It should be noted that in the present, the fastener 3322 may be a bolt or other fastener. In some embodiments, when the fastener 3322 moves to either end of the adjustment groove 3312a, the radiator bracket 331 is respectively in the first limit position and second limit position. Optionally, when the fastener 3322 is positioned at the lower end of the adjustment groove 3312a, the radiator bracket 331 is in the first limit position, and when the fastener is positioned at the upper end of the adjustment groove 3312a, the radiator bracket 331 is in the second limit position. The "predetermined rotation range" mentioned above refers to the rotation range of the radiator bracket 331 when it rotates between the first and second limit positions.

In these embodiments, the adjustment groove 3312a may be in the shape of a circular arc. A longitudinal plane 105 is defined as a plane perpendicular to the width direction of the all-terrain vehicle 100. The projection of the rotation center of the radiator bracket 331 on the longitudinal plane 105 along the width direction of the all-terrain vehicle 100 is defined as a rotation center projection. The center of the projection of the adjustment groove 3312a on the longitudinal plane 105 along the width direction of the all-terrain vehicle 100 overlaps with the rotation center projection, that is, when viewed along the width direction of the all-terrain vehicle 100, the circular arc shape of the adjustment groove 3312a is centered on the axis of the rotation center of the radiator bracket 331. Furthermore, several limit portions 3312b evenly distributed are defined inside the adjustment groove 3312a. The limit portions 3312b divide the adjustment groove 3312a into several regions, each of which allows the fastener 3322 to pass through the adjustment groove 3312a. When the fastener 3322 is positioned in one region, the fastener 3322 abuts against the limit portions 3312b, so that the fastener 3322 in the adjustment groove 3312a is relatively fixed. When the fastener 3322 passes through the adjustment groove 3312a, the fastener 3322 is positioned between adjacent limit portions 3312b or positioned between the inner walls of the limiting portion 3312b and the adjustment groove 3312a. Optionally, the limiting portion 3312b may be designed as the shape of unilateral tooth, which allows the radiator bracket 331 to be relatively fixed to the upper protective bracket 332 without affecting radiator bracket 331 rotation. Therefore, the limiting portion 3312b can not only provide positioning for the mounting of the fastener 3322, but also improve the stability of the connection between the fastener 3322 and the mounting hole 3323, thereby avoiding the loosening of the connection between the radiator bracket 331 and the upper protective bracket 332 during the driving process of the all-terrain vehicle 100, which may cause the radiator bracket 113 to shake. In addition, the limit portions 3312b may also define different adjustment positions, making it easier for the driver to adjust the position of the radiator bracket 113.

It should be noted that when needs to adjust the radiator bracket 113, the fastener 3322 is firstly removed from the adjustment groove 3312a. At this time, the radiator bracket 331 can rotate relative to the upper protective bracket 332 around the rotation center, that is, the radiator 151 can rotate relative to the upper protective bracket 332, and the adjustment groove 3312a can therefore change its position relative to the upper protective bracket 332. While rotating the radiator bracket 331 to an appropriate position, ensure that the mounting hole 3323 overlaps with the adjustment groove 3312a along the width direction of the all-terrain vehicle 100. At this time, insert the fastener 3322 into the adjustment groove 3312a and form a fixed connection with the mounting hole 3323, thereby completing the position adjustment of the radiator 151.

Furthermore, the angle defined between the radiator 151 and the horizontal plane can be adjusted by moving the fastener 3322 within the adjustment groove 3312a. When the radiator bracket 331 is in the first limit position, the angle defined between the second predetermined plane 103 and the horizontal plane 101 is the first limit angle, and the angle α1 between the second predetermined plane 103 and the horizontal plane 101 is in the range from 30 degrees to 42 degrees. In some embodiments, the angle α1 define between the second predetermined plane 103 and the horizontal plane 101 is 36 degrees. When the radiator bracket 331 is in the second limit position, the angle defined between the second predetermined plane 103 and the horizontal plane 101 is the second limit angle, and the angle α2 defined between the second predetermined plane 103 and the horizontal plane 101 is in the range from 54 degrees to 66 degrees. In some embodiments, the angle α2 between the second predetermined plane 103 and the horizontal plane 101 is 60 degrees. It should be noted that the angle difference between the first limit angle and the second limit angle is the "predetermined rotation range" described above. Therefore, the angle α can not only avoid the adjustment angle of the radiator bracket 113 being too large, which may cause the radiator 151 to obstruct the driver's line of sight, but also avoid the angle α being too small, which may cause the radiator 151 to not obtain the intake air volume that matches the current speed mode, resulting in poor working efficiency of the radiator 151. Therefore, while meeting the working requirements of the radiator 151, it can also avoid the position of the radiator 151 being too high, which may affect the driver's observation of road conditions, and thus improve the driving safety of the all-terrain vehicle 100.

Optionally, referring to FIG. 14, a laterally extending plane 104 is defined as a plane perpendicular to the length direction of the all-terrain vehicle 100. A projection of the radiator 151 along the length direction of the all-terrain vehicle 100 on the laterally extending plane 104 is defined as a radiator projection. When the angle α3 define between the second predetermined plane 103 and the horizontal plane 101 is 90 degrees, then the radiator 151 is in an upright position, and the area of the radiator projection is defined as a radiator 151 area, which is also the maximum air intake area of the radiator 151. The area of the radiator projection when the radiator bracket 331 is in the first limit position is larger than the area of the radiator projection when the radiator bracket 331 is in the second limit position. The area of the radiator projection increases with the increase of the angle between the second predetermined plane 103 and the horizontal plane 101. Therefore, with the adjustment of the radiator bracket 331, the radiator 151 can obtain a larger air intake volume, thereby improving the heat dissipation effect of the radiator 151.

It should be noted that for the radiator 151 in second embodiments, the angle α between the second predetermined plane 103 and the horizontal plane 101 may be at least partially the same as the angle between the second predetermined plane 103 and the horizontal plane 101 in the first embodiment. In the present application, the all-terrain vehicle 100 has a low-speed mode and high-speed mode. The required intake air volumes in the two modes for the radiator 151 to dissipate heat are different. Therefore, at least one limit portion 3312b is arranged to allow the adjustment groove 3312a to be divided into at least two areas, so that the radiator 151 can be adjusted in the at least two different positions to achieve at least two different angles. The number of the limit portions 3312b may be greater than or equal to 2, so that while meeting the air intake requirements of the radiator 151, the driver can also adjust the angle of radiator 151 multiple times according to actual driving needs.

As shown in FIG. 16, as a third embodiment, the all-terrain vehicle 100 includes a frame 43 and a radiator assembly 15 that are substantially the same as the second embodiment. The radiator assembly 15 includes a radiator 151. The content that differs from the second embodiment is described below.

As shown in FIG. 16, the frame 43 includes a radiator bracket 431 and an upper protective bracket 432. The radiator bracket 431 includes a rotating end 4311 and a fixing end 4312, and the upper protective bracket 432 includes a connection portion 4321, which is rotatably connected to the rotating end 4311. An adjustment groove 4312a is defined at the fixing end 4312, and the upper protective bracket 432 further includes a fastener 4322 and a mounting hole 4323. The fastener 4322 at least partially passes through the adjustment groove 4312a and is fixedly received in the mounting hole 4323. Optionally, the fastener 4322 and the adjustment groove 4312a is connected by means of a gear-rack connection, that is, the outer circumference of the fastener 4322 is a gear structure, and the inner wall of the adjustment groove 4312a is an arc-shaped rack structure. When the fastener 4322 is inserted into the adjusting groove 4312a and fixedly received in the mounting hole 4323, the gear on the fastener 4322 can mesh with the tooth groove inside the adjustment groove 4312a. When the fastener 4322 is rotated, the adjustment groove 4312a can rotate around the rotation center of the radiator bracket 431.

Furthermore, the fastener 4322 is disposed with an adjustment knob 4322a and a fixing button 4322b. The adjustment knob 4322a is used to control the rotation of the gear structure outside the fastener 4322. When the adjustment knob 4322a rotates, the gear structure also rotates, thereby driving the adjustment groove 4312a to rotate to achieve angle adjustment of the radiator bracket 113. The fixing button 4322b is used to achieve a fixed connection between the radiator bracket 431 and the upper protective bracket 432. The fixing button 4322b defaults to a protruding state. The fixing button 4322b can be pressed an odd number of times to remain in a pressed state or pressed an even number of times to regain a protruding state. When the fixing button 4322b is in a protruding state, the adjustment knob 4322a cannot rotate, thereby preventing the gear structure from rotating. At this time, it is not possible to control the rotation of the adjustment groove 4312a by adjusting the gear structure through the adjustment knob 4322a. When the fixing button 4322b is in the pressed state, the gear structure can rotate relative to the rack structure to drive the adjustment groove 4312a to rotate. At this time, the gear structure can be rotated by adjustment knob 4322a to drive the adjustment groove 4312a to rotate, thereby adjusting the position of the radiator bracket 431 and achieving angle adjustment. It should be noted that in this way, simply press the fixing button 4322b to make it in the pressed state, and the radiator bracket 431 can enter the adjustable state. By adjusting the adjustment knob 4322a, the adjustment groove 4312a can rotate with the radiator bracket 431. When the relative position adjustment of the radiator bracket 431 is completed, simply press the fixing button 4322b again, and the radiator bracket 431 will be in a stationary state, which can complete the angle adjustment of the radiator assembly 15. This makes the adjustment of the radiator assembly 15 more convenient and the adjustment accuracy higher.

Referring to FIG. 14, in these embodiments, when the fastener 4322 moves to the either ends of the adjustment groove 4312a, the radiator bracket 431 is in the first limit position and second limit position, respectively. Optionally, when the fastener 4322 is positioned at the lower end of the adjustment groove 4312a, the radiator bracket 431 is in the first limit position, and when the fastener is positioned at the upper end of the adjustment groove 4312a, the radiator bracket 431 is in the second limit position. Furthermore, when the radiator bracket 431 is in the first limit position, the angle defined between the second predetermined plane 103 and the horizontal plane 101 is the first limit angle, which is in the range from 30 degrees to 42 degrees. When the radiator bracket 431 is in the second limit position, the angle between the second predetermined plane 103 and the horizontal plane 101 is the second limit angle, which is in the range from 54 degrees to 66 degrees. The angle defined between the second predetermined plane 103 and the horizontal plane 101 can be adjusted between the first limit angle and the second limit angle. For example, the first limit angle is 36 degrees, and the second limit angle is 60 degrees. Therefore, the fastener 4322 and the adjustment groove 4312a can be infinitely adjusted through gear and rack structure, and the driver can select any adjustment angle within the angle adjustment range of the radiator bracket 431, thus meeting the personalized adjustment needs of the driver. This allows the driver to adjust the angle of the radiator bracket 431 in real time according to the actual driving needs, thereby improving the convenience of adjusting the angle of the radiator bracket 431. Optionally, a laterally extending plane 104 is defined as a plane perpendicular to the length direction of the all-terrain vehicle 100. A projection of the radiator 151 along the length direction of the all-terrain vehicle 100 on the laterally extending plane 104 is defined as a radiator projection. When the angle α defined between the second predetermined plane 103 and the horizontal plane 101 is 90 degrees, then the radiator 151 is in an upright position, and the area of the radiator projection is defined as a radiator 151 area, which is also the maximum air intake area of the radiator 151. When the radiator bracket 431 is in the first limit position, that is, when the angle defined between the second predetermined plane 103 and the horizontal plane 101 is the first limit angle, the projection of the radiator 151 along the length direction of the all-terrain vehicle 100 on the laterally extending plane 104 is defined as a first projection. When the radiator bracket 431 is in the second limit position, that is, when the angle defined between the second predetermined plane 103 and the horizontal plane 101 is the second limit angle, the projection of the radiator 151 along the length direction of the all-terrain vehicle 100 on the laterally extending plane 104 is defined as a second projection. A ratio of the area of the second projection to the area of the first projection is in the range from1.2 to 1.7. Therefore, with the adjustment of the radiator bracket 431, the angle between the second predetermined plane 103 and the horizontal plane 101 gradually increases, which can enable the radiator 151 to obtain a larger air intake and improve the heat dissipation effect of the radiator 151.

As shown in FIG. 17, as alternative embodiments, the upper protective bracket 1121 is connected to the radiator bracket 113 and further detachably connected to the lower protective frame 1122. Thus, the rotation function of the radiator 151 can also be achieved with the upper protective frame 1121 fixedly connected to the radiator bracket 113 and rotatably connected to the lower protective bracket 1122. Optionally, the upper protective bracket 1121 has an upper rotating connection portion 1121e and the lower protective bracket 1122 has a lower rotating connection portion 1122b positioned at the top end of the lower protective bracket 1122. When viewed along the width direction of the all-terrain vehicle 100, the upper rotating connection portion 1121e overlaps the lower rotating connection portion 1122b. The lower protective bracket 1122 further includes a rotating shaft extending along the width direction of the all-terrain vehicle 100. The rotating shaft 1122c runs through the rotating connection portion 1121e and the rotating portion 1122b, so that the rotating connection portion 1121e can rotate relative to the rotating portion 1122b, thereby enabling the upper protective bracket 1121 rotatably connected to the lower protective bracket 1122. The upper protective bracket 1121 can be flipped forward along the length direction of the all-terrain vehicle 100, and due to the fixed connection between the radiator bracket 113 and the upper protective bracket 1121, the flipping function of the radiator 151 can be achieved. In some embodiments, the upper protective bracket 1121 has a stationary state and an adjustable state. When the upper protective bracket 1121 is in the stationary state, the upper protective bracket 1121 is fixedly connected to the main frame 111. When the upper protective bracket 1121 is in the adjustable state, the fixed connection between the upper protective bracket 1121 and the main frame 111 is released, and the upper protective bracket 1121 and the lower protective bracket 1122 rotate relative to each other. Therefore, when the radiator 151 rotates through the upper protective bracket 1121, at least portion of the upper protective bracket 1121 is positioned on two sides of the radiator bracket 113 along the width direction of the all-terrain vehicle 100, causing the upper protective bracket 1121 to be in the adjustable state. When the driver or maintenance personnel perform maintenance on the electrical components 21 and radiator 151, the upper protective bracket 1121 will interfere with the maintenance personnel's operation, resulting in inconvenience during the maintenance process. In some embodiments, the rotation function of the radiator 151 is achieved through the upper protective bracket 1121, so that when the radiator 151 needs to be rotated, the upper protective bracket 1121 can drive the radiator bracket 113 to rotate together, thereby avoiding interference from the upper protective bracket 1121 on the maintenance of the driver or maintenance personnel, which facilitates the maintenance of the all-terrain vehicle 100.

In some embodiments, a contact 1121f is arranged at the lower end of the upper protective bracket 1121. The contact 1121f is further at least partially positioned forward of the rotating connection portion 1121e, so that the contact 1121f rotates with the rotation of the upper protective bracket 1121 until it comes into contact with the lower protective bracket 1122. At this time, the upper protective bracket 1121 rotates to the maximum adjustable state. The radiator 151 extends along a second predetermined plane 103, and an angle α is defined between the second predetermined plane 103 and the horizontal plane 101. When the upper protective bracket 1121 is in the maximum adjustable state, the angle α is the maximum adjustment angle, which is in the range from 90 degrees to 110 degrees. In some embodiments, the angle α is 100 degrees. Through the above settings, the contact 1121f can prevent the flipping angle of the upper protective bracket 1121 from being too large, thereby avoiding the center of gravity of the radiator 151 and the upper protective bracket 1121 from moving forward and causing excessive pressure on the rotating portion 1122b and the rotating connection portion 1121e, thereby avoiding the breakage of the rotating shaft 1122c and improving the stability of the connection between the upper protective bracket 1121 and the lower protective bracket 1122. In addition, the contact 1121f can further prevent the excessive flipping angle of the upper protective bracket 1121 from causing the pipeline between the radiator assembly 15 and the engine 141 to be too long, which is not conducive to the layout of the pipeline.

It should be noted that in this way, when the upper protective bracket 1121 switches from the stationary state to the adjustable state, the fasteners at the connection hole 1121d are first removed to release the fixed connection between the upper protective bracket 1121 and the main frame 111. Then, the upper protective bracket 1121 is rotated forward along the length direction of the all-terrain vehicle 100 until the contact 1121f contacts the lower protective bracket 1122. At this time, the radiator assembly 15 is in the maximum adjustable state. After completing the maintenance, the upper protective bracket 1121 is rotated backward along the length direction of the all-terrain vehicle 100 to restore the initial position of the upper protective bracket 1121, and the fasteners are fixed in the connection hole 1121d to complete one flip of the radiator assembly 15.

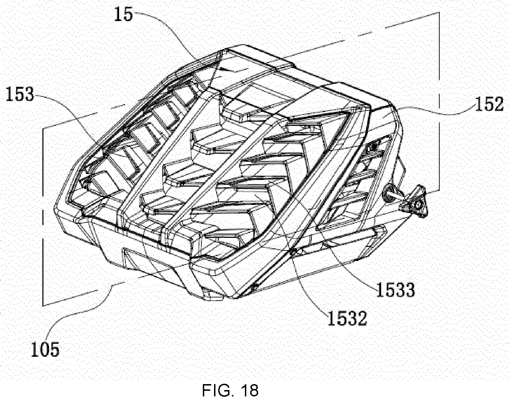

As shown in FIG. 18, the radiator assembly 15 further includes a radiator guard 152 and an air intake grille 153 positioned on the radiator guard 152. The radiator guard 152 is fixedly connected to the radiator bracket 113. During the rotation of the radiator bracket 113, the radiator guard 152 and the air intake grille 153 also rotate together. A radiator guard 152 is used to protect the radiator 151 and prevent the radiator 151 from being damaged due to sand and gravel splashing when the all-terrain vehicle 100 is driving on gravel roads, which may affect the normal operation of the radiator 151. When the all-terrain vehicle 100 is traversing mud and/or water conditions, the radiator guard 152 can also prevent mud splashing onto the surface of the radiator 151 and causing blockage, thereby improving the working environment of the radiator 151 and increasing its working life.

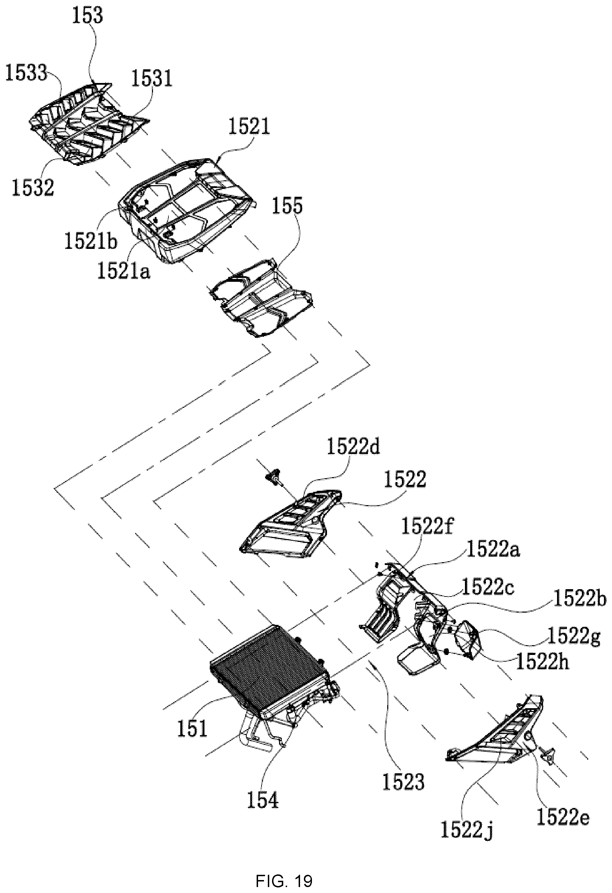

As shown in FIG. 19, the radiator guard 152 further includes a front guard 1521 and a rear guard 1522. The front guard 1521 is fixedly connected to the rear guard 1522, and when the radiator bracket 113 is in the stationary state, the front guard 1521 and the rear guard 1522 are substantially longitudinally aligned. The front guard 1521 is positioned forward of the radiator 151, and the rear guard 1522 is positioned behind the radiator 151. Furthermore, the rear guard 1522 includes a first guard plate 1522a and a second guard plate 1522b laterally aligned. An air outlet portion 1522c is defined between the first guard plate 1522a and the second guard plate 1522b. When the radiator bracket 113 is in the stationary state, when viewed from a front perspective, the air outlet portion 1522c at least partially overlaps with the radiator 151. In this way, the design of the air outlet portion 1522c ensures that the air outlet of the radiator 151 is not affected by the rear guard 1522, thereby maximizing the air outlet of the radiator 151 and improving its heat dissipation effect. It should be noted that the front guard 1521 and the rear guard 1522 cooperatively define a radiator accommodating space 1523, and the radiator 151 is at least partially positioned in the radiator accommodating space 1523 and fixedly connected to the radiator bracket 113.

In some embodiments, the first guard plate 1522a defines an air guide outlet 1522f. When viewed along the length direction of the all-terrain vehicle 100, the air guide outlet 1522f at least partially overlaps the radiator 151. The air guide outlet 1522f cooperates with the air outlet portion 1522c to improve the air guide efficiency of the radiator 151 and enhance its heat dissipation effect. The radiator assembly 15 further includes a filling pipe 154 positioned on the side of the radiator 151 adjacent to the second protective plate 1522b. The filling pipe 154 is used to fill the radiator 151 with coolant to avoid low heat dissipation efficiency caused by insufficient coolant. In the present application, along the length direction of the all-terrain vehicle 100, the filling pipe 154 is fixedly connected to the radiator 151, thereby reducing the length of the pipeline between the filling pipe 154 and the radiator 151 and facilitating the layout of the pipeline. Optionally, an opening 1522h is defined on the second protective plate 1522b. When viewed along the length direction of the all-terrain vehicle 100, the opening 1522h overlaps the filling pipe 154, making it easy to directly fill the filling pipe 154 with liquid without disassembling the second protective plate 1522b. Furthermore, a mounting cover 1522g is arranged on the second protective plate 1522b to cover the opening 1522h and to detachably connected to the opening 1522h. More Optionally, the mounting cover 1522g is recessed backwards to define a groove. When the mounting cover 1522g is connected to the opening 1522h, the filling pipe 154 at least partially penetrates the opening 1522h and is positioned inside the mounting cover 1522g. The method allows the driver to directly remove the mounting cover 1522g and to add coolant to the radiator 151 through the filling pipe 154. The rear guard 1522 further includes a first side plate 1522d and a second side plate 1522e laterally aligned. The first side plate 1522d is fixedly connected to the first protective plate 1522a, and the second side plate 1522e is fixedly connected to the second protective plate 1522b. The first side plate 1522d and the second side plate 1522e are substantially parallel to the longitudinal plane 105. When the rear protective cover is in the mount state, the first side plate and the second side plate are positioned on the left and right sides of the radiator, respectively. Optionally, the first side plate 1522d and the second side plate 1522e are both equipped with air outlets 1522j. When viewed along the width direction of the all-terrain vehicle 100, the air outlet 1522j at least partially overlaps the radiator 151, thereby improving the air outlet efficiency of the radiator 151 and avoiding hot air staying on the radiator 151 for too long and affecting its heat dissipation efficiency.

In some embodiments, the radiator assembly 15 further includes a filter cover 155. Along the length direction of the all-terrain vehicle 100, the filter cover 155 is positioned between the front guard 1521 and the radiator 151 and is fixedly connected to the front guard 1521, The air intake grille 153, the front guard 1521, and the filter cover 155 are substantially longitudinally aligned. The front guard 1521 defines an air inlet 1521a in fluid communication with the radiator accommodating space 1523. Along the length direction of the all-terrain vehicle 100, the air inlet 1521a faces towards the front of the vehicle and at least partially overlaps the filter cover 155. The air inlet grille 153 covers the air inlet 1521a, which can prevent debris from entering the radiator 151 through the air inlet 1521a during the air intake process. The filter cover 155 is capable of performing secondary filtration on ambient air to prevent small debris from entering the radiator 151. In addition, the air intake grille 153 can further prevent mud from splashing onto the surface of the radiator 151 through the air intake 1521a when the all-terrain vehicle 100 is driving on wet and muddy roads. Furthermore, the air intake grille 153 has a grille clamping portion 1531, and the front guard 1521 defines a clamping groove 1521b. The grille clamping portion 1531 is clamped with the clamping groove 1521b. Therefore, the quick release method of connecting and disconnecting the air intake grille 153 with the front guard 1521 through the grid clamping portion 1531 and the clamping groove 1521b eliminates the need for disassembly or installation tools. This greatly simplifies the assembly process of the air intake grille 153, improves the disassembly speed of the air intake grille 153, and allows the driver to disassemble and assemble the air intake grille 153 by hand even when driving the all-terrain vehicle 100 in a field without maintenance environment. In addition, the quick detachable design between the air intake grille 153 and the front guard 1521 can effectively reduce the time required for cleaning and maintenance when the driver or maintenance personnel clean and maintain the radiator assembly 15, thereby facilitating the maintenance of the all-terrain vehicle 100.

As shown in FIG. 18, the air intake grille 153 further includes several air guide ports 1532 and several air guide covers 1533. The air guide covers 1533 are all positioned above the air guide ports 1532. The air guide covers 1533 can change the direction of ambient air, allowing ambient air to enter the radiator 151 through the air guide ports 1532 and to exchange heat with the radiator 151. When the radiator bracket 113 is in a stationary state, the air guide covers 1533 extends along the length direction of the all-terrain vehicle 100, and the orientation of the air guide ports 1532 is oriented towards the front of the all-terrain vehicle 100, so that the air guide covers 1533 can guide ambient air and facilitate the intake of air into the radiator 151. The air intake grille 153 is rotated with the radiator bracket 113 when the radiator bracket 113 is rotated, so the air guide ports 1532 gradually moves downwardly and is oriented downwards. Therefore, the air guide ports 1532 are angled with the flow direction of ambient air, the air guide cover 1533 can change the flow direction of ambient air, allowing the radiator 151 to obtain a larger air intake volume, thereby improving the heat dissipation effect of the radiator 151. In addition, when the all-terrain vehicle 100 is traversing mud and/or water conditions, the air guide cover 1533 can further prevent muds and water from splashing and entering the radiator 151 through the air guide port 1532, thereby avoiding the radiator 151 from being blocked by muds.

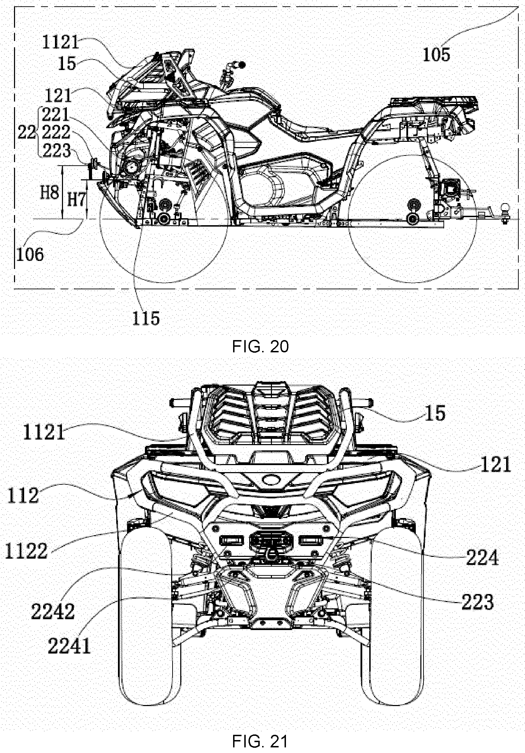

As shown in FIG. 20 and FIG. 21, the all-terrain vehicle 100 further includes a winch assembly 22 at least partially positioned at the front of the all-terrain vehicle 100. The winch assembly 22 is used to provide additional traction. When the all-terrain vehicle 100 cannot escape from a predicament relying solely on its own power, the traction provided by the winch assembly 22 enables the all-terrain vehicle 100 to overcome difficulties on its own or with the assistance of other all-terrain vehicles 100, such as on the mud, sand dunes, or snow conditions. The frame 11 further includes an adapter bracket 115 positioned forward of the main frame 111, and the winch assembly 22 is fixedly connected to the adapter bracket 115. The adapter bracket 115 is fixedly connected to the main frame 111 by means of welding or bolt connection, thereby avoiding damage to the frame 11 caused by the tension generated by the winch assembly 22 during operation.

It should be noted that the winch assembly 22 is generally positioned at the bottom of the all-terrain vehicle 100. That is to say, when viewed from a side perspective of the all-terrain vehicle 100, the winch assembly 22 at least partially overlaps the front wheels 131, making the force point on the front of the all-terrain vehicle 100 lower. Therefore, when the winch assembly 22 is working, the tension of the winch assembly 22 can cause the front of the vehicle to move upwards, making the all-terrain vehicle 100 more quickly out of danger, reducing the escape difficulty of the all-terrain vehicle 100. Furthermore, when viewed from a top perspective of the all-terrain vehicle 100, the winch assembly 22 at least partially overlaps the radiator 151. In the existing layout of the all-terrain vehicle 100, the radiator assembly 15 is generally positioned behind the lower protective bracket 1122, and the winch assembly 22 is positioned below the radiator assembly 15. When the all-terrain vehicle 100 is involved in a sinking accident, the winch assembly 22 is prone to getting stuck in the muds together, making it difficult for the driver to locate the winch assembly 22 when attempting to rescue the vehicle. In the present application, since the radiator assembly 15 is positioned above the front cover plate 121, the arrangement position of the winch assembly 22 can be left vacant behind the lower protective bracket 1122. The winch assembly 22 in the present application is positioned behind the lower protective bracket 1122, making it easier to locate the position of the winch assembly 22 in the event of a sinking accident of the all-terrain vehicle 100, thereby reducing the difficulty of rescuing the all-terrain vehicle 100 and improving rescue efficiency.

Optionally, a straight line connecting a projection of a rotation center of the front wheel 131 and a projection of a rotation center of the rear wheel 132 on the longitudinal plane 105 is defined as a wheelbase line 106. The projection of winch assembly 22 along the width direction of all-terrain vehicle 100 on longitudinal plane 105 is defined as a winch projection, and a minimum distance H7 between the winch projection and wheelbase line 106 is in the range from 9 cm to 14 cm. In some embodiments, the minimum distance H7 is in the range from 10 cm to 13 cm. In some embodiments, the minimum distance H7 is 11.6 cm. Due to the presence of the electrical assembly 21 above the winch assembly 22, too large minimum distance H7 can easily cause the winch assembly 22 to be positioned too high, resulting in interference between the winch assembly 22 and the electrical assembly 21. This can also lead to the winch assembly 22 being positioned too high, causing the front of the all-terrain vehicle 100 to sink during the rescue process due to the high force point on the front of the vehicle, making it difficult to rescue the vehicle. Too small minimum distance H7 can easily cause the winch assembly 22 to be too low, making it difficult for the driver to find the position of the winch assembly 22 after the all-terrain vehicle 100 gets stuck. In this way, it is possible to avoid interference between winch assembly 22 and electrical assembly 21, improve the rescue efficiency of all-terrain vehicle 100, and facilitate the driver to find the position of winch assembly 22.

In some embodiments, the winch assembly 22 includes a winch motor 221, a winch rope 222, and a winch hook 223. The winch motor 221 is fixedly connected to the main frame through the adapter bracket 115. One end of the winch rope 222 is connected to the shaft of the winch motor 221, and the other end of the winch rope 222 is connected to the winch hook 223. Therefore, when the all-terrain vehicle 100 needs to be rescued, the winch hook 223 is hung on a fixed object, and the winch rope 222 is tightened by the winch motor 221, so that the all-terrain vehicle 100 receives tension to help it get out of trouble. In addition, the winch assembly 22 of the all-terrain vehicle 100 can also be connected to the towing point of the vehicle through the winch hook 223 when the accompanying vehicle needs to be rescued, and the winch motor 221 can tighten the winch rope 222 to help the accompanying vehicle get out of trouble. The winch assembly 22 further includes a winch mounting frame 224 fixedly connected to the lower protective bracket 1122. The winch mounting bracket 224 defines an outlet 2241, and the winch rope 222 extends forward and passes through the outlet 2241. The width of the outlet 2241 is greater than the outer diameter of the winch rope 222 and less than the thickness of the winch hook, so that the outlet 2241 allows the winch rope 222 to pass through without allowing the winch hook 223 to pass through. When the winch rope 222 is stored in the shaft of the winch motor 221, the winch hook 223 is suspended forward of the outlet 2241 through the winch rope 222. The winch motor 221 is further provided with a start switch (not shown in the figures), When the driver needs it, simply turn on the start switch and pull the winch hook 223 to pull the winch rope 222 out of the winch motor 221, thereby improving the rescue efficiency of the all-terrain vehicle 100. Two drag holes 2242 are defined on the winch mounting bracket 224, which are positioned on two sides of the outlet 2241 along the width direction of the all-terrain vehicle 100. The drag holes 2242 are used to install winch hooks 223, providing towing points for the all-terrain vehicle 100. When the all-terrain vehicle 100 needs to be rescued, it can be rescued by other vehicles.

Furthermore, a projection of the winch motor 221 on the longitudinal plane 105 along the width direction of the all-terrain vehicle 100 is defined as a winch motor projection. The minimum distance between the motor projection and the wheelbase line 106 is equal to the minimum distance between the winch projection and the wheelbase line 106 mentioned above. The minimum distance between the motor projection and the wheelbase line 106 is the minimum distance H7 between the winch projection and the wheelbase line 106 mentioned above. The projection of the outlet 2241 along the width direction of the all-terrain vehicle 100 on the longitudinal plane 105 is defined as a outlet projection. The minimum distance H8 between the outlet projection and the wheelbase line 106 is greater than the minimum distance H7, so that the pulling force received by the all-terrain vehicle 100 when the winch rope 222 is pulled in has an upward component along the height direction of the all-terrain vehicle 100. Furthermore, during the process of pulling the all-terrain vehicle 100 with the winch rope 222, the front of the all-terrain vehicle 100 can gradually move upward and away from the mud, thereby improving the efficiency of the all-terrain vehicle 100 in getting out of trouble.

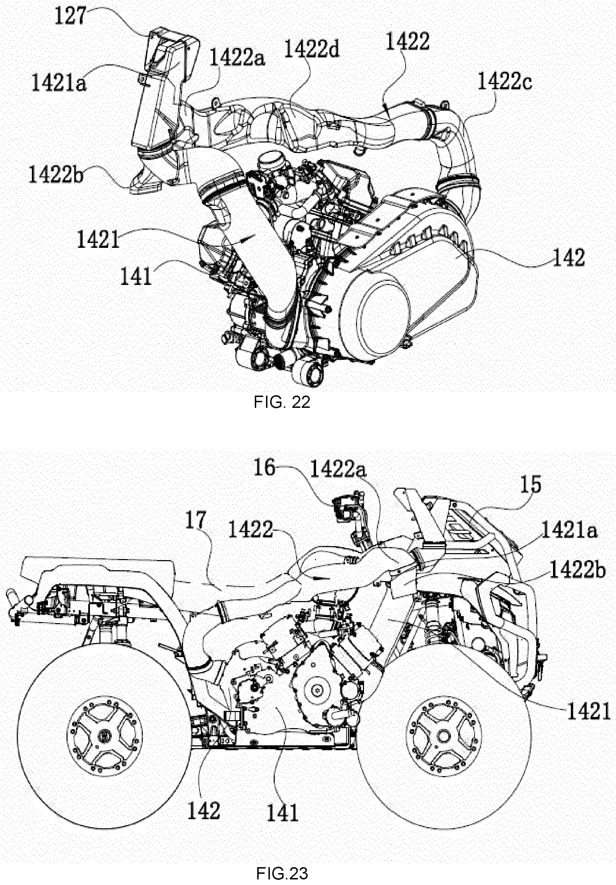

As shown in FIG. 22, FIG. 23, and FIG. 24, the prime mover assembly 14 further includes a transmission 142 connected to the engine 141. The transmission 142 is used to change the output speed of the engine 141 to better match the current driving environment. In the present application, the transmission 142 may be a continuously variable transmission (CVT) 142. The CVT generates heat during operation, so it is necessary to dissipate heat from the transmission 142 to avoid damage caused by excessive operating temperature of the transmission 142. Optionally, the transmission 142 includes a transmission intake pipe 1421 and a transmission exhaust pipe 1422. Ambient air enters the interior of the transmission 142 through the transmission intake pipe 1421 and completes heat exchange inside the transmission 142. The hot air is then discharged from the transmission exhaust pipe 1422, thereby reducing the temperature of the transmission 142 and keeping it at an appropriate operating temperature, thereby improving the efficiency of the transmission 142.

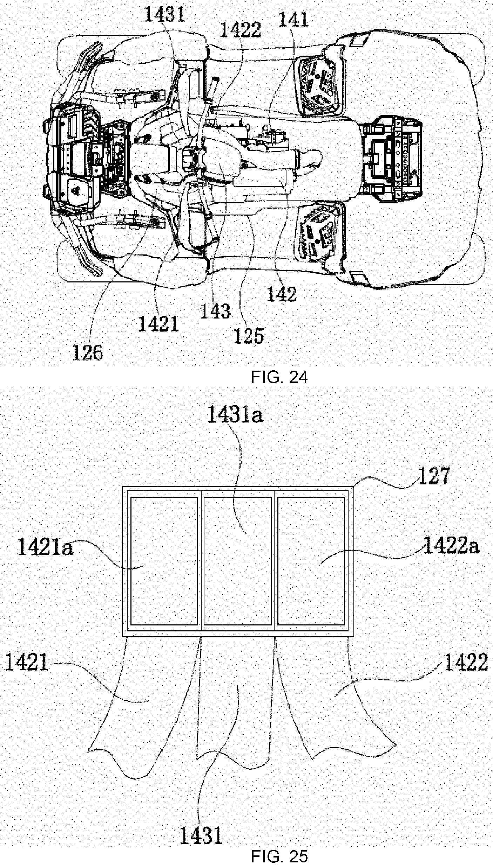

As shown in FIG. 23 and FIG. 24, it should be noted that when the all-terrain vehicle 100 is traversing mud and/or water conditions, if the transmission 142 is flooded, it is easy to cause the transmission 142 to slip, thereby affecting power output. In order to enable the all-terrain vehicle 100 of the present application to travel on mud and/or water conditions, it is necessary to adjust the positions of the transmission intake pipe 1421 and the transmission exhaust pipe 1422 to avoid mud and water entering the transmission 142 from the transmission intake pipe 1421 and the transmission exhaust pipe 1422 and causing damage to the transmission 142 when the all-terrain vehicle 100 travels on mud and/or water conditions. Optionally, when viewed along the height direction of the all-terrain vehicle 100, both the transmission intake pipe 1421 and the transmission exhaust pipe 1422 extend along the length direction of the all-terrain vehicle 100, and are distributed along the width direction of the all-terrain vehicle 100. When viewed along the width direction of the all-terrain vehicle 100, the transmission intake pipe 1421 and the transmission exhaust pipe 1422 are at least partially positioned above the engine 141. The transmission intake pipe 1421 is also at least partially positioned above the engine 141, and the transmission exhaust pipe 1422 extends from the rear of the engine 141 to the front of the engine 141. In this way, the transmission intake pipe 1421 and the transmission exhaust pipe 1422 are positioned above the engine 141 and extends along the length direction of the all-terrain vehicle 100, which can effectively reduce the length of the pipelines and facilitate the arrangement of the transmission intake pipe 1421 and the transmission exhaust pipe 1422 on the entire vehicle of the all-terrain vehicle 100, making the vehicle more compact and improving the space utilization rate of the all-terrain vehicle 100.

Furthermore, the transmission intake pipe 1421 includes a transmission inlet 1421a, and the transmission exhaust pipe 1422 includes a transmission outlet 1422a. Ambient air enters the transmission intake pipe 1421 through the transmission inlet 1421a, and hot air is discharged from the transmission outlet 1422a through the transmission exhaust pipe 1422. The transmission inlet 1421a and the transmission outlet 1422a are both positioned behind the radiator assembly 15, and the transmission inlet 1421a and the transmission outlet 1422a are both positioned near the steering assembly 16. The vehicle cover 12 further includes a main cover 125 for covering a prime mover assembly 14, with at least a portion of the main cover 125 positioned below the instrument panel 122. The transmission inlet 1421a is positioned at least partially outside the main cover 125, and the transmission outlet 1422a is positioned inside the main cover 125. The vehicle cover 12 further includes a front plate 126 positioned forward of the instrument panel 122, and a variable speed air inlet positioned above the front plate 126. The transmission outlet 1422a is positioned below the front plate 126, which can separate the transmission exhaust port 1422a from the transmission inlet 1421a, avoiding the high temperature gas discharged from the transmission exhaust port 1422a from affecting the intake of the transmission inlet 1421a. The prime mover assembly 14 further includes an air filter 143, which filters the air entering the engine 141. The air filter 143 is at least partially positioned above the engine 141 and is connected to the engine 141. The air filter 143 includes an air filter intake pipe 1431 at least partially positioned forward of the air filter 143. The air filter intake pipe 1431 is further positioned above the engine 141 and transmission 142 and extends upwards. Along the width direction of the all-terrain vehicle 100, the air filter intake pipe 1431 is positioned between the transmission intake pipe 1421 and the transmission exhaust pipe 1422. The air filter intake pipe 1431 defines an air filter intake port 1431a. The air filter intake port 1431a is positioned at least partially above the instrument panel 122, and is further positioned at least partially forward of the steering handle 161. The transmission inlet 1421a and the transmission outlet 1422a are positioned at least partially behind the air filter intake port 1431a. When viewed along the width direction of the all-terrain vehicle 100, both the transmission inlet 1421a and the transmission outlet 1422a at least partially overlap with the instrument panel cover 122. In this way, since the air filter intake port 1431a is positioned at the top of the all-terrain vehicle 100, and the transmission inlet 1421a and the transmission outlet 1422a are positioned on two sides of the air filter intake port 1431a, the distance between the transmission inlet 1421a and the transmission outlet 1422a and the ground can be increased. This can prevent mud and water from entering the transmission inlet 1421a and transmission outlet 1422a, and then entering the interior of the transmission 142 through the transmission intake pipe 1421 and transmission exhaust pipe 1422, thereby raising the wading height of the all-terrain vehicle 100 and improving passability on muddy roads.

In some embodiments, the CVT air inlet 1421a faces downward along the height direction of the all-terrain vehicle 100, so that when mud and water enter the variable speed air inlet 1421a, due to the downward direction of the CVT air inlet 1421a, mud and water can flow out from the CVT air inlet 1421a under the action of gravity, thereby avoiding mud and water from entering the transmission 142. It should be noted that the term "facing outward along the width direction of the all-terrain vehicle 100" above refers to extending away from a longitudinal plane 105. In some embodiments, the CVT exhaust port 1422a faces outward along the width direction of the all-terrain vehicle 100, thereby avoiding the hot air inside the transmission exhaust pipe 1422 from staying inside the all-terrain vehicle 100 for too long. The transmission exhaust pipe 1422 further includes an interface 1422b on the transmission outlet 1422a. The interface 1422b faces downward along the height direction of the all-terrain vehicle 100, so that it can flow out of the interface 1422b due to its own gravity after mud and water enter the rotary interface 1422b, just like the transmission inlet 1421a, to avoid mud and water entering the transmission exhaust pipe 1422 and affecting the normal operation of the transmission 142.

Furthermore, the transmission exhaust pipe 1422 includes a first pipe 1422c and a second pipe 1422d that are fixedly connected to each other. The first pipe 1422c communicates with the interior of the transmission 142. The first pipe 1422c is positioned behind the second pipe 1422d and is connected to the second pipe 1422d. The second pipe 1422d extends along the length direction of the all-terrain vehicle 100, and is further connected to the interface 1422b. The material hardness of the first pipe 1422c is greater than that of the second pipe 1422d. Optionally, the first pipe 1422c may be designed as a rubber pipe to avoid interference with surrounding components due to installation errors, thereby improving the space utilization of the all-terrain vehicle 100. In addition, the inner diameter of the first pipe 1422c may be expanded to increase the ventilation volume of the first pipe 1422c, improve the heat dissipation efficiency of the transmission 142, and thus improve the working efficiency of the transmission 142.

As shown in FIG. 25, in some embodiments, the vehicle cover 12 further includes an intake plastic part 127 positioned above the instrument panel cover. The air filter intake pipe 1431 is fixedly connected to the intake plastic part 127, and three connection ports are defined on the intake plastic part 127. In the present application, one end of the intake plastic part 127 is respectively connected to the transmission intake pipe 1421, the transmission exhaust pipe 1422, and the air filter intake pipe 1431. The three connection ports of the intake plastic part are respectively formed as the transmission inlet 1421a, the transmission exhaust port 1422a, and the air filter intake port 1431a, so that the transmission inlet 1421a, the transmission outlet 1422a, and the air filter intake port 1431a are defined in the same area through the intake plastic part 127, facilitating the arrangement of various intake and exhaust ports, reducing the difficulty of mold opening for the plastic parts of the all-terrain vehicle 100, and improving the space utilization rate of the all-terrain vehicle 100. The transmission inlet 1421a and the air filter intake port 1431a face towards the rear of the all-terrain vehicle 100, which can effectively prevent mud and water from entering the intake port forward of the all-terrain vehicle 100 and affecting the operation of the engine 141.

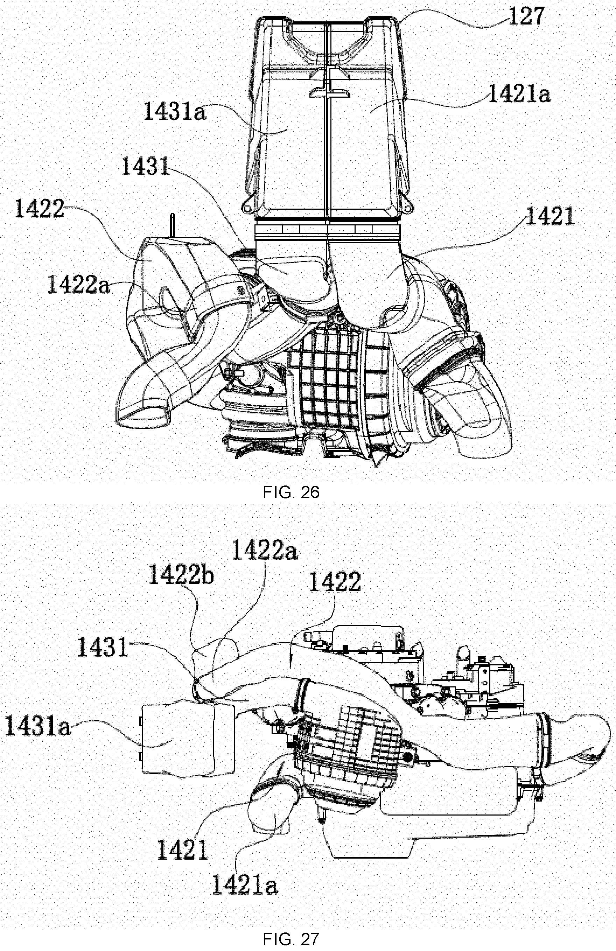

As shown in FIG. 26, optionally, in order to avoid the hot air in the transmission outlet 1422a affecting the temperature of the air filter intake port 1431a and the ambient air inside the transmission inlet 1421a, only two intake ports can be defined on the intake plastic part 127. In the present application, one end of the intake plastic part 127 is respectively connected to the transmission intake pipe 1421 and the air filter intake pipe 1431. The two intake ports of the intake plastic part 127 are respectively defined as the transmission inlet 1421a and the air filter intake port 1431a, so that the transmission inlet 1421a and the air filter intake port 1431a can be defined in the same area through the intake plastic part 127, and the transmission outlet 1422a can be defined separately. While reducing the difficulty of molding the plastic parts of the all-terrain vehicle 100 and improving its space utilization, the transmission outlet 1422a is further kept away from the transmission inlet 1421a and the air filter intake port 1431a, In order to avoid the natural air temperature rise in the transmission inlet 1421a and the air filter intake port 1431a caused by the high temperature of hot air in the transmission outlet 1422a, which leads to a decrease in the heat dissipation efficiency of the transmission 142.

As shown in FIG. 27, optionally, the transmission inlet 1421a and the transmission outlet 1422a may also be aligned along the width direction of the all-terrain vehicle 100 on two sides of the air filter intake port 1431a. The transmission inlet 1421a, the transmission outlet 1422a, and the air filter intake port 1431a are independently arranged, which limits the arrangement of the transmission intake pipe 1421 and transmission exhaust pipe 1422 compared to the fixed transmission inlet 1421a and transmission outlet 1422a. The direction of the pipeline is relatively fixed, which makes the arrangement of the transmission intake pipe 1421 and the transmission exhaust pipe 1422 relatively fixed. It is necessary to change the arrangement of other components to avoid mutual interference, which can easily lead to the waste of 100 space in the all-terrain vehicle. The pipeline layout of the transmission intake pipe 1421 and the transmission exhaust pipe 1422 in the present embodiment is relatively flexible, so that the transmission intake pipe 1421 and the transmission exhaust pipe 1422 can be adjusted according to the actual layout of the all-terrain vehicle 100, thereby improving the space utilization rate of the all-terrain vehicle 100. Furthermore, both the transmission inlet 1421a and the transmission outlet 1422a are covered by the vehicle cover 12, so as to prevent mud and water splashing from entering the transmission inlet 1421a and the transmission outlet 1422a, which may affect the normal operation of the transmission 142.

It should be understood that for those skilled in the art, improvements or transformations can be made based on the above description, and all such improvements and transformations should fall within the scope of protection of the claims attached to this application.

## Claims

1. An all-terrain vehicle (100) comprising:
a frame (11, 23, 33, 43) comprising a main frame (111) and a protective bracket (112) positioned at least partially forward of the main frame (111);
a vehicle cover (12) comprising a front cover plate (121) positioned at least partially above the main frame (111), with an access port (1211) defined on the front cover plate (121);
a plurality of wheels (13) positioned at least partially below the main frame (111);
a prime mover assembly (14) at least partially and fixedly connected to the main frame (111), and the prime mover assembly (14) is connected to the plurality of wheels (13) in a transmission mode;
a radiator assembly (15) comprising a radiator (151) for dissipating heat from the prime mover assembly (14);
an electrical assembly (21) fixedly connected to the main frame (111);
the frame (11, 23, 33, 43) further comprises a radiator bracket (113, 231, 331, 431) and the radiator (151) is fixedly connected to the radiator bracket (113, 231, 331, 431); **characterized in that**
theradiator (78) is positioned at least partially above the front cover plate (121); and
the electrical assembly (21) is positioned at the front of the all-terrain vehicle (100) and fixedly connected to the main frame; and
wherein the protective bracket (121) comprises an upper protective bracket (1121, 232, 332, 432) connected to the main frame (111) and positioned substantially above the front cover plate (121); and
the radiator bracket (113, 231, 331, 431) is positioned at least partially above and rotatably connected to the upper protective bracket (1121, 232,332,432); and
the radiator bracket (113, 231, 331, 431) has a stationary state and an adjustable state relative to the upper protective bracket (1121, 232, 332, 432); the radiator bracket (113, 231, 331, 431) is capable of rotating relative to the upper protective bracket (1121, 232, 332, 432) when the radiator bracket (113, 231, 331, 431) is in the adjustable state; and the radiator bracket (113, 231, 331, 431) is stationary relative to the upper protective bracket (1121, 232, 332, 432) when the radiator bracket (113, 231, 331, 431) is in the stationary state,
wherein the radiator assembly (15) at least partially covers above the access port (1211) and the electrical assembly (21) is positioned under access port (1211), when viewed along the height direction of the all-terrain vehicle (100), projections of the electrical assembly (21), the access port (1211), and the radiator assembly (15) on the horizontal plane (101) at least partially overlap with each other, and the radiator bracket (113, 231, 331, 431) is capable of rotating to facilitate the access to the electrical assembly (21).

2. The all-terrain vehicle (100) of claim 1, wherein the radiator bracket (113, 231, 331, 431) comprises a rotating end (1131, 2311, 3311, 4311) and a fixing end (1132, 2312, 3312, 4312) aligned along the height direction of the all-terrain vehicle (100), the upper protective bracket (1121, 232, 332, 432) comprises a connection portion (1121a, 2321, 3321, 4321) rotatably connected to the rotating end (1131, 2311, 3311, 4311) of the radiator bracket (113, 231, 331, 431), when viewed along the width direction of the all-terrain vehicle (100) the rotating end (1131, 2311, 3311, 4311) overlaps with the connection portion (1121a, 2321, 3321, 4321); and the upper protective bracket (1121, 232, 332, 432) further comprises a fastener (1121c, 2323, 3322, 4322) detachably connected to the fixing end (1132, 2312, 3312, 4312).

3. The all-terrain vehicle (100) of claim 2, wherein the fixing end (1132, 2312, 3312, 4312) of the radiator bracket (113, 231, 331, 431) defines a fixing hole (1132a, 2312a), and the upper protective bracket (1121, 232, 332, 432) defines a mounting hole (1121b, 2322, 3323, 4323), when the radiator bracket (113, 231, 331, 431) is in the stationary state and when viewed along the width direction of the all-terrain vehicle (100), the mounting hole (1121b, 2322, 3323, 4323) overlaps with the fixing hole (1132a, 2312a) and the fastener (1121c, 2323, 3322, 4322) is threaded through both the mounting hole (1121b, 2322, 3323, 4323) and the fixing hole (1132a, 2312a).

4. The all-terrain vehicle (100) of claim 3, wherein the plurality of wheels (13) comprises a rear wheel (132) positioned below the main frame (111), and a point where the rear wheel (132) contacts with the ground is defined as a ground point, a plane passing through the ground point and perpendicular to a straight line passing through the ground point and a rotation center of the rear wheel (132) is defined as a horizontal plane (101), the radiator (151) extends along a predetermined plane (103), the radiator bracket (113, 231, 331, 431) further comprises a limit device (1133), the limit device (1133) is capable of rotating with the rotation of the radiator bracket (113, 231, 331, 431) until the limit device (1133) abuts against the connection portion (1121a, 2321, 3321, 4321); when the limit device (1133) abuts against the connection portion (1121a, 2321, 3321, 4321), the radiator bracket (113, 231, 331, 431) is in a maximum adjustable state, and the angle (α) defined between the predetermined plane (103) and the horizontal plane (101) is a maximum adjustment angle, and the maximum adjustment angle is in the range from 90 degrees to 110 degrees.

5. The all-terrain vehicle (100) of claim 4, wherein when the radiator bracket (113, 231, 331, 431) is stationary to the upper protective bracket (1121, 232, 332, 432), the radiator bracket (113, 231, 331, 431) has a first limit position and a second limit position, an angle (α) defined between the predetermined plane (103) and the horizontal plane (101) is a first limit angle when the radiator bracket (113, 231, 331, 431) is in the first limit position, and the first limit angle is in the range from 30 degrees to 42 degrees.

6. The all-terrain vehicle (100) of claim 5, wherein an angle (α) defined between the predetermined plane (103) and the horizontal plane (101) is a second limit angle when the radiator bracket (113, 231, 331, 431) is in the second limit position, and the second limit angle is in the range from 54 degrees to 66 degrees.

7. The all-terrain vehicle (100) of claim 6, wherein the difference between the first limit angle and the second limit angle is in the range from 12 degrees to 36 degrees.

8. The all-terrain vehicle (100) of claim 7, wherein an adjustment groove (3312a, 4312a) is defined on the fixing end (1132, 2312, 3312, 4312), and the upper protective bracket (1121, 232, 332, 432) defines a mounting hole (1121b, 2322, 3323, 4323), the fastener (1121c, 2323, 3322, 4322) at least partially passes through the adjustment groove (3312a, 4312a) and is fixedly received in the mounting hole (1121b, 2322, 3323, 4323), the mounting hole (1121b, 2322, 3323, 4323) at least partially overlaps with the adjustment groove (3312a, 4312a) when viewed along an extension direction of the mounting hole (1121b, 2322, 3323, 4323).

9. The all-terrain vehicle (100) of claim 8, wherein the adjustment groove (3312a, 4312a) is substantially arc-shaped, defining a longitudinal plane (105) perpendicular to the width direction of the all-terrain vehicle (100), a projection of a rotation center of the radiator bracket (113, 231, 331, 431) projected along the width direction of the all-terrain vehicle (100) on the longitudinal plane (105) is defined as a rotation center projection, the center of an projection of the adjustment groove (3312a, 4312a) projected along the width direction of the all-terrain vehicle (100) on the longitudinal plane (105) overlaps with the rotation center projection.

10. The all-terrain vehicle (100) of claim 9, wherein several limit portions (3312b) uniformly distributed are defined in the adjustment groove (3312a, 4312a), the limit portions (3312b) abuts against the fasteners, the fasteners (1121c, 2323, 3322, 4322) are positioned between adjacent limit portions (3312b), or the fasteners (1121c, 2323, 3322, 4322) are positioned between the limit portion (3312b) and the inner wall of the adjustment groove (3312a, 4312a).

11. The all-terrain vehicle (100) of claim 8, wherein the outer circumference of the fastener (1121c, 2323, 3322, 4322) is designed as a gear, and the inner wall of the adjustment groove (3312a, 4312a) is designed as an arc-shaped rack, when the fastener (1121c, 2323, 3322, 4322) passes through the adjustment groove (3312a, 4312a) and is fixedly received in the mounting hole (1121b, 2322, 3323, 4323), the gear on the fastener (1121c, 2323, 3322, 4322) meshes with the tooth groove inside the adjustment groove (3312a, 4312a).

12. The all-terrain vehicle (100) of claim 11, wherein an adjustment knob (4322a) and a fixing button (4322b) are disposed on the fastener (1121c, 2323, 3322, 4322), and the gear on the fastener (1121c, 2323, 3322, 4322) rotates with the rotation of the adjustment knob (4322a); the fixing button (4322b) has a protruding state and a pressed state, when the fixing button (4322b) is in the protruding state, both the adjustment knob (4322a) and the gear on the fastener (1121c, 2323, 3322, 4322) cannot rotate, when the fixing button (4322b) is in the pressed state, the adjustment knob (4322a) drives the gear on the fastener (1121c, 2323, 3322, 4322) to rotate.

13. The all-terrain vehicle (100) of any one of claim 1-12, wherein the protective bracket (112) comprises a lower protective bracket (1122) fixedly connected to the main frame (111), and the upper protective bracket (1121, 232, 332, 432) is rotatably connected to the lower protective bracket (1122).

14. The all-terrain vehicle (100) of any one of claim 4-12, when the radiator bracket (113, 231, 331, 431) is in the stationary state, the radiator (151) covers the access port (1211), and when the radiator bracket (113, 231, 331, 431) is in the maximum adjustable state, the access port (1211) is able to be directly seen along the height direction of the all-terrain vehicle (100).

15. The all-terrain vehicle (100) of any one of claim 1-12, wherein the radiator assembly (15) further comprises a radiator guard (152) and an air intake grille (153) positioned on the radiator guard (152), the radiator guard (152) is fixedly connected to the radiator bracket (113, 231, 331, 431), and the radiator guard (152) and the air intake grille (153) is capable of rotating together with the radiator bracket (113, 231, 331, 431).

## Patentansprüche

1. Ein Geländefahrzeug (100), umfassend:
einen Rahmen (11, 23, 33, 43), der einen Hauptrahmen (111) und eine Schutzhalterung (112) umfasst, die zumindest teilweise vor dem Hauptrahmen (111) positioniert ist;
eine Fahrzeugverkleidung (12), die eine vordere Abdeckplatte (121) umfasst, die zumindest teilweise oberhalb des Hauptrahmens (111) positioniert ist, wobei eine Zugangsöffnung (1211) an der vorderen Abdeckplatte (121) definiert ist;
eine Mehrzahl von Rädern (13), die zumindest teilweise unterhalb des Hauptrahmens (111) positioniert sind;
eine Antriebsaggregatanordnung (14), die zumindest teilweise und fest mit dem Hauptrahmen (111) verbunden ist, und die Antriebsaggregatanordnung (14) ist in einem Übertragungsmodus mit der Mehrzahl von Rädern (13) verbunden;
eine Kühleranordnung (15), die einen Kühler (151) zum Abführen von Wärme von der Antriebsaggregatanordnung (14) umfasst;
eine elektrische Anordnung (21), die fest mit dem Hauptrahmen (111) verbunden ist;
der Rahmen (11, 23, 33, 43) ferner eine Kühlerhalterung (113, 231, 331, 431) umfasst und der Kühler (151) fest mit der Kühlerhalterung (113, 231, 331, 431) verbunden ist; **dadurch gekennzeichnet, dass**
der Kühler (78) zumindest teilweise oberhalb der vorderen Abdeckplatte (121) positioniert ist; und
die elektrische Anordnung (21) an der Vorderseite des Geländefahrzeugs (100) positioniert und fest mit dem Hauptrahmen verbunden ist; und
wobei die Schutzhalterung (121) eine obere Schutzhalterung (1121, 232, 332, 432) umfasst, die mit dem Hauptrahmen (111) verbunden und im Wesentlichen oberhalb der vorderen Abdeckplatte (121) positioniert ist; und
die Kühlerhalterung (113, 231, 331, 431) zumindest teilweise oberhalb der oberen Schutzhalterung (1121, 232, 332, 432) positioniert und drehbar mit dieser verbunden ist; und
die Kühlerhalterung (113, 231, 331, 431) einen stationären Zustand und einen verstellbaren Zustand relativ zu der oberen Schutzhalterung (1121, 232, 332, 432) aufweist; die Kühlerhalterung (113, 231, 331, 431) in der Lage ist, relativ zu der oberen Schutzhalterung (1121, 232, 332, 432) zu rotieren, wenn sich die Kühlerhalterung (113, 231, 331, 431) in dem verstellbaren Zustand befindet; und die Kühlerhalterung (113, 231, 331, 431) stationär relativ zu der oberen Schutzhalterung (1121, 232, 332, 432) ist, wenn sich die Kühlerhalterung (113, 231, 331, 431) in dem stationären Zustand befindet;
wobei die Kühleranordnung (15) zumindest teilweise oberhalb der Zugangsöffnung (1211) abdeckt und die elektrische Anordnung (21) unter der Zugangsöffnung (1211) positioniert ist, wobei, wenn entlang der Höhenrichtung des Geländefahrzeugs (100) betrachtet, Projektionen der elektrischen Anordnung (21), der Zugangsöffnung (1211) und der Kühleranordnung (15) auf die horizontale Ebene (101) zumindest teilweise miteinander überlappen, und die Kühlerhalterung (113, 231, 331, 431) in der Lage ist, zu rotieren, um den Zugang zu der elektrischen Anordnung (21) zu erleichtern.

2. Geländefahrzeug (100) nach Anspruch 1, wobei die Kühlerhalterung (113, 231, 331, 431) ein Drehende (1131, 2311, 3311, 4311) und ein Befestigungsende (1132, 2312, 3312, 4312) umfasst, die entlang der Höhenrichtung des Geländefahrzeugs (100) ausgerichtet sind, die obere Schutzhalterung (1121, 232, 332, 432) einen Verbindungsabschnitt (1121a, 2321, 3321, 4321) umfasst, der drehbar mit dem Drehende (1131, 2311, 3311, 4311) der Kühlerhalterung (113, 231, 331, 431) verbunden ist, wobei, wenn entlang der Breitenrichtung des Geländefahrzeugs (100) betrachtet, das Drehende (1131, 2311, 3311, 4311) mit dem Verbindungsabschnitt (1121a, 2321, 3321, 4321) überlappt; und die obere Schutzhalterung (1121, 232, 332, 432) ferner ein Befestigungselement (1121c, 2323, 3322, 4322) umfasst, das lösbar mit dem Befestigungsende (1132, 2312, 3312, 4312) verbunden ist.

3. Geländefahrzeug (100) nach Anspruch 2, wobei das Befestigungsende (1132, 2312, 3312, 4312) der Kühlerhalterung (113, 231, 331, 431) ein Befestigungsloch (1132a, 2312a) definiert und die obere Schutzhalterung (1121, 232, 332, 432) ein Montageloch (1121b, 2322, 3323, 4323) definiert, wobei, wenn sich die Kühlerhalterung (113, 231, 331, 431) in dem stationären Zustand befindet und wenn entlang der Breitenrichtung des Geländefahrzeugs (100) betrachtet, das Montageloch (1121b, 2322, 3323, 4323) mit dem Befestigungsloch (1132a, 2312a) überlappt und das Befestigungselement (1121c, 2323, 3322, 4322) sowohl durch das Montageloch (1121b, 2322, 3323, 4323) als auch durch das Befestigungsloch (1132a, 2312a) hindurchgeführt ist.

4. Geländefahrzeug (100) nach Anspruch 3, wobei die Mehrzahl von Rädern (13) ein Hinterrad (132) umfasst, das unterhalb des Hauptrahmens (111) positioniert ist, und ein Punkt, an dem das Hinterrad (132) den Boden berührt, als ein Bodenpunkt definiert ist, eine Ebene, die durch den Bodenpunkt verläuft und senkrecht zu einer geraden Linie ist, die durch den Bodenpunkt und ein Rotationszentrum des Hinterrads (132) verläuft, als eine horizontale Ebene (101) definiert ist, der Kühler (151) sich entlang einer vorbestimmten Ebene (103) erstreckt, die Kühlerhalterung (113, 231, 331, 431) ferner eine Begrenzungseinrichtung (1133) umfasst, die Begrenzungseinrichtung (1133) in der Lage ist, mit der Rotation der Kühlerhalterung (113, 231, 331, 431) zu rotieren, bis die Begrenzungseinrichtung (1133) an dem Verbindungsabschnitt (1121a, 2321, 3321, 4321) anliegt; wenn die Begrenzungseinrichtung (1133) an dem Verbindungsabschnitt (1121a, 2321, 3321, 4321) anliegt, befindet sich die Kühlerhalterung (113, 231, 331, 431) in einem maximalen verstellbaren Zustand, und der Winkel (α), der zwischen der vorbestimmten Ebene (103) und der horizontalen Ebene (101) definiert ist, ist ein maximaler Verstellwinkel, und der maximale Verstellwinkel liegt im Bereich von 90 Grad bis 110 Grad.

5. Geländefahrzeug (100) nach Anspruch 4, wobei, wenn die Kühlerhalterung (113, 231, 331, 431) stationär relativ zu der oberen Schutzhalterung (1121, 232, 332, 432) ist, die Kühlerhalterung (113, 231, 331, 431) eine erste Grenzposition und eine zweite Grenzposition aufweist, ein Winkel (α), der zwischen der vorbestimmten Ebene (103) und der horizontalen Ebene (101) definiert ist, ein erster Grenzwinkel ist, wenn sich die Kühlerhalterung (113, 231, 331, 431) in der ersten Grenzposition befindet, und der erste Grenzwinkel im Bereich von 30 Grad bis 42 Grad liegt.

6. Geländefahrzeug (100) nach Anspruch 5, wobei ein Winkel (α), der zwischen der vorbestimmten Ebene (103) und der horizontalen Ebene (101) definiert ist, ein zweiter Grenzwinkel ist, wenn sich die Kühlerhalterung (113, 231, 331, 431) in der zweiten Grenzposition befindet, und der zweite Grenzwinkel im Bereich von 54 Grad bis 66 Grad liegt.

7. Geländefahrzeug (100) nach Anspruch 6, wobei die Differenz zwischen dem ersten Grenzwinkel und dem zweiten Grenzwinkel im Bereich von 12 Grad bis 36 Grad liegt.

8. Geländefahrzeug (100) nach Anspruch 7, wobei eine Verstellnut (3312a, 4312a) an dem Befestigungsende (1132, 2312, 3312, 4312) definiert ist und die obere Schutzhalterung (1121, 232, 332, 432) ein Montageloch (1121b, 2322, 3323, 4323) definiert, das Befestigungselement (1121c, 2323, 3322, 4322) zumindest teilweise durch die Verstellnut (3312a, 4312a) hindurchtritt und fest in dem Montageloch (1121b, 2322, 3323, 4323) aufgenommen ist, das Montageloch (1121b, 2322, 3323, 4323) zumindest teilweise mit der Verstellnut (3312a, 4312a) überlappt, wenn entlang einer Erstreckungsrichtung des Montagelochs (1121b, 2322, 3323, 4323) betrachtet.

9. Geländefahrzeug (100) nach Anspruch 8, wobei die Verstellnut (3312a, 4312a) im Wesentlichen bogenförmig ist, wobei eine Längsebene (105) definiert ist, die senkrecht zu der Breitenrichtung des Geländefahrzeugs (100) ist, eine Projektion eines Rotationszentrums der Kühlerhalterung (113, 231, 331, 431), die entlang der Breitenrichtung des Geländefahrzeugs (100) auf die Längsebene (105) projiziert wird, als eine Rotationszentrumprojektion definiert ist, die Mitte einer Projektion der Verstellnut (3312a, 4312a), die entlang der Breitenrichtung des Geländefahrzeugs (100) auf die Längsebene (105) projiziert wird, mit der Rotationszentrumprojektion überlappt.

10. Geländefahrzeug (100) nach Anspruch 9, wobei mehrere gleichmäßig verteilte Begrenzungsabschnitte (3312b) in der Verstellnut (3312a, 4312a) definiert sind, die Begrenzungsabschnitte (3312b) an den Befestigungselementen anliegen, die Befestigungselemente (1121c, 2323, 3322, 4322) zwischen benachbarten Begrenzungsabschnitten (3312b) positioniert sind, oder die Befestigungselemente (1121c, 2323, 3322, 4322) zwischen dem Begrenzungsabschnitt (3312b) und der Innenwand der Verstellnut (3312a, 4312a) positioniert sind.

11. Geländefahrzeug (100) nach Anspruch 8, wobei der Außenumfang des Befestigungselements (1121c, 2323, 3322, 4322) als ein Zahnrad ausgebildet ist, und die Innenwand der Verstellnut (3312a, 4312a) als eine bogenförmige Zahnstange ausgebildet ist, wobei, wenn das Befestigungselement (1121c, 2323, 3322, 4322) durch die Verstellnut (3312a, 4312a) hindurchtritt und fest in dem Montageloch (1121b, 2322, 3323, 4323) aufgenommen ist, das Zahnrad an dem Befestigungselement (1121c, 2323, 3322, 4322) mit der Zahnnut innerhalb der Verstellnut (3312a, 4312a) in Eingriff steht.

12. Geländefahrzeug (100) nach Anspruch 11, wobei ein Verstellknopf (4322a) und ein Fixierknopf (4322b) an dem Befestigungselement (1121c, 2323, 3322, 4322) angeordnet sind, und das Zahnrad an dem Befestigungselement (1121c, 2323, 3322, 4322) mit der Rotation des Verstellknopfs (4322a) rotiert; der Fixierknopf (4322b) einen hervorstehenden Zustand und einen gedrückten Zustand aufweist, wobei, wenn sich der Fixierknopf (4322b) in dem hervorstehenden Zustand befindet, sowohl der Verstellknopf (4322a) als auch das Zahnrad an dem Befestigungselement (1121c, 2323, 3322, 4322) nicht rotieren können, wenn sich der Fixierknopf (4322b) in dem gedrückten Zustand befindet, der Verstellknopf (4322a) das Zahnrad an dem Befestigungselement (1121c, 2323, 3322, 4322) zum Rotieren antreibt.

13. Geländefahrzeug (100) nach irgendeinem der Ansprüche 1-12, wobei die Schutzhalterung (112) eine untere Schutzhalterung (1122) umfasst, die fest mit dem Hauptrahmen (111) verbunden ist, und die obere Schutzhalterung (1121, 232, 332, 432) drehbar mit der unteren Schutzhalterung (1122) verbunden ist.

14. Geländefahrzeug (100) nach irgendeinem der Ansprüche 4-12, wobei, wenn sich die Kühlerhalterung (113, 231, 331, 431) in dem stationären Zustand befindet, der Kühler (151) die Zugangsöffnung (1211) abdeckt, und wenn sich die Kühlerhalterung (113, 231, 331, 431) in dem maximalen verstellbaren Zustand befindet, die Zugangsöffnung (1211) entlang der Höhenrichtung des Geländefahrzeugs (100) direkt gesehen werden kann.

15. Geländefahrzeug (100) nach irgendeinem der Ansprüche 1-12, wobei die Kühleranordnung (15) ferner einen Kühlerschutz (152) und ein an dem Kühlerschutz (152) positioniertes Lufteinlassgitter (153) umfasst, der Kühlerschutz (152) fest mit der Kühlerhalterung (113, 231, 331, 431) verbunden ist, und der Kühlerschutz (152) und das Lufteinlassgitter (153) zusammen mit der Kühlerhalterung (113, 231, 331, 431) rotieren können.

## Revendications

1. Un véhicule tout-terrain (100), comprenant :
un châssis (11, 23, 33, 43) comprenant un châssis principal (111) et un support de protection (112) positionné au moins partiellement en avant du châssis principal (111) ;
un carénage de véhicule (12) comprenant une plaque de recouvrement avant (121) positionnée au moins partiellement au-dessus du châssis principal (111), avec un orifice d'accès (1211) défini sur la plaque de recouvrement avant (121) ;
une pluralité de roues (13) positionnées au moins partiellement au-dessous du châssis principal (111) ;
un ensemble de moteur primaire (14) connecté au moins partiellement et de manière fixe au châssis principal (111), et l'ensemble de moteur primaire (14) est connecté à la pluralité de roues (13) dans un mode de transmission ;
un ensemble de radiateur (15) comprenant un radiateur (151) pour dissiper la chaleur provenant de l'ensemble de moteur primaire (14) ;
un ensemble électrique (21) connecté de manière fixe au châssis principal (111) ;
le châssis (11, 23, 33, 43) comprend en outre un support de radiateur (113, 231, 331, 431) et le radiateur (151) est connecté de manière fixe au support de radiateur (113, 231, 331, 431) ; **caractérisé en ce que**
le radiateur (78) est positionné au moins partiellement au-dessus de la plaque de recouvrement avant (121) ; et
l'ensemble électrique (21) est positionné à l'avant du véhicule tout-terrain (100) et connecté de manière fixe au châssis principal ; et
dans lequel le support de protection (121) comprend un support de protection supérieur (1121, 232, 332, 432) connecté au châssis principal (111) et positionné sensiblement au-dessus de la plaque de recouvrement avant (121) ; et
le support de radiateur (113, 231, 331, 431) est positionné au moins partiellement au-dessus du support de protection supérieur (1121, 232, 332, 432) et connecté rotativement à celui-ci ; et
le support de radiateur (113, 231, 331, 431) présente un état stationnaire et un état réglable par rapport au support de protection supérieur (1121, 232, 332, 432) ; le support de radiateur (113, 231, 331, 431) est apte à tourner par rapport au support de protection supérieur (1121, 232, 332, 432) lorsque le support de radiateur (113, 231, 331, 431) est dans l'état réglable ; et le support de radiateur (113, 231, 331, 431) est stationnaire par rapport au support de protection supérieur (1121, 232, 332, 432) lorsque le support de radiateur (113, 231, 331, 431) est dans l'état stationnaire ;
dans lequel l'ensemble de radiateur (15) recouvre au moins partiellement au-dessus de l'orifice d'accès (1211) et l'ensemble électrique (21) est positionné sous l'orifice d'accès (1211), lorsque, vu selon la direction de hauteur du véhicule tout-terrain (100), des projections de l'ensemble électrique (21), de l'orifice d'accès (1211), et de l'ensemble de radiateur (15) sur le plan horizontal (101) se chevauchent au moins partiellement les unes avec les autres, et le support de radiateur (113, 231, 331, 431) est apte à tourner pour faciliter l'accès à l'ensemble électrique (21).

2. Véhicule tout-terrain (100) selon la revendication 1, dans lequel le support de radiateur (113, 231, 331, 431) comprend une extrémité rotative (1131, 2311, 3311, 4311) et une extrémité de fixation (1132, 2312, 3312, 4312) alignées selon la direction de hauteur du véhicule tout-terrain (100), le support de protection supérieur (1121, 232, 332, 432) comprend une portion de connexion (1121a, 2321, 3321, 4321) connectée rotativement à l'extrémité rotative (1131, 2311, 3311, 4311) du support de radiateur (113, 231, 331, 431), lorsque, vu selon la direction de largeur du véhicule tout-terrain (100), l'extrémité rotative (1131, 2311, 3311, 4311) chevauche la portion de connexion (1121a, 2321, 3321, 4321) ; et le support de protection supérieur (1121, 232, 332, 432) comprend en outre un élément de fixation (1121c, 2323, 3322, 4322) connecté de manière détachable à l'extrémité de fixation (1132, 2312, 3312, 4312).

3. Véhicule tout-terrain (100) selon la revendication 2, dans lequel l'extrémité de fixation (1132, 2312, 3312, 4312) du support de radiateur (113, 231, 331, 431) définit un trou de fixation (1132a, 2312a), et le support de protection supérieur (1121, 232, 332, 432) définit un trou de montage (1121b, 2322, 3323, 4323), lorsque le support de radiateur (113, 231, 331, 431) est dans l'état stationnaire et lorsque, vu selon la direction de largeur du véhicule tout-terrain (100), le trou de montage (1121b, 2322, 3323, 4323) chevauche le trou de fixation (1132a, 2312a) et l'élément de fixation (1121c, 2323, 3322, 4322) est passé à travers à la fois le trou de montage (1121b, 2322, 3323, 4323) et le trou de fixation (1132a, 2312a).

4. Véhicule tout-terrain (100) selon la revendication 3, dans lequel la pluralité de roues (13) comprend une roue arrière (132) positionnée au-dessous du châssis principal (111), et un point où la roue arrière (132) est en contact avec le sol est défini comme un point au sol, un plan passant par le point au sol et perpendiculaire à une ligne droite passant par le point au sol et un centre de rotation de la roue arrière (132) est défini comme un plan horizontal (101), le radiateur (151) s'étend selon un plan prédéterminé (103), le support de radiateur (113, 231, 331, 431) comprend en outre un dispositif de limitation (1133), le dispositif de limitation (1133) est apte à tourner avec la rotation du support de radiateur (113, 231, 331, 431) jusqu'à ce que le dispositif de limitation (1133) vienne en appui contre la portion de connexion (1121a, 2321, 3321, 4321) ; lorsque le dispositif de limitation (1133) vient en appui contre la portion de connexion (1121a, 2321, 3321, 4321), le support de radiateur (113, 231, 331, 431) est dans un état réglable maximum, et l'angle (α) défini entre le plan prédéterminé (103) et le plan horizontal (101) est un angle de réglage maximum, et l'angle de réglage maximum est dans la plage de 90 degrés à 110 degrés.

5. Véhicule tout-terrain (100) selon la revendication 4, dans lequel lorsque le support de radiateur (113, 231, 331, 431) est stationnaire par rapport au support de protection supérieur (1121, 232, 332, 432), le support de radiateur (113, 231, 331, 431) présente une première position limite et une deuxième position limite, un angle (α) défini entre le plan prédéterminé (103) et le plan horizontal (101) est un premier angle limite lorsque le support de radiateur (113, 231, 331, 431) est dans la première position limite, et le premier angle limite est dans la plage de 30 degrés à 42 degrés.

6. Véhicule tout-terrain (100) selon la revendication 5, dans lequel un angle (α) défini entre le plan prédéterminé (103) et le plan horizontal (101) est un deuxième angle limite lorsque le support de radiateur (113, 231, 331, 431) est dans la deuxième position limite, et le deuxième angle limite est dans la plage de 54 degrés à 66 degrés.

7. Véhicule tout-terrain (100) selon la revendication 6, dans lequel la différence entre le premier angle limite et le deuxième angle limite est dans la plage de 12 degrés à 36 degrés.

8. Véhicule tout-terrain (100) selon la revendication 7, dans lequel une rainure de réglage (3312a, 4312a) est définie sur l'extrémité de fixation (1132, 2312, 3312, 4312), et le support de protection supérieur (1121, 232, 332, 432) définit un trou de montage (1121b, 2322, 3323, 4323), l'élément de fixation (1121c, 2323, 3322, 4322) passe au moins partiellement à travers la rainure de réglage (3312a, 4312a) et est reçu de manière fixe dans le trou de montage (1121b, 2322, 3323, 4323), le trou de montage (1121b, 2322, 3323, 4323) chevauche au moins partiellement la rainure de réglage (3312a, 4312a) lorsque vu selon une direction d'extension du trou de montage (1121b, 2322, 3323, 4323).

9. Véhicule tout-terrain (100) selon la revendication 8, dans lequel la rainure de réglage (3312a, 4312a) est sensiblement en forme d'arc, définissant un plan longitudinal (105) perpendiculaire à la direction de largeur du véhicule tout-terrain (100), une projection d'un centre de rotation du support de radiateur (113, 231, 331, 431) projetée selon la direction de largeur du véhicule tout-terrain (100) sur le plan longitudinal (105) est définie comme une projection de centre de rotation, le centre d'une projection de la rainure de réglage (3312a, 4312a) projetée selon la direction de largeur du véhicule tout-terrain (100) sur le plan longitudinal (105) chevauche la projection de centre de rotation.

10. Véhicule tout-terrain (100) selon la revendication 9, dans lequel plusieurs portions de limitation (3312b) uniformément réparties sont définies dans la rainure de réglage (3312a, 4312a), les portions de limitation (3312b) viennent en appui contre les éléments de fixation, les éléments de fixation (1121c, 2323, 3322, 4322) sont positionnés entre des portions de limitation adjacentes (3312b), ou les éléments de fixation (1121c, 2323, 3322, 4322) sont positionnés entre la portion de limitation (3312b) et la paroi interne de la rainure de réglage (3312a, 4312a).

11. Véhicule tout-terrain (100) selon la revendication 8, dans lequel la circonférence extérieure de l'élément de fixation (1121c, 2323, 3322, 4322) est conçue comme un engrenage, et la paroi interne de la rainure de réglage (3312a, 4312a) est conçue comme une crémaillère en forme d'arc, lorsque l'élément de fixation (1121c, 2323, 3322, 4322) passe à travers la rainure de réglage (3312a, 4312a) et est reçu de manière fixe dans le trou de montage (1121b, 2322, 3323, 4323), l'engrenage sur l'élément de fixation (1121c, 2323, 3322, 4322) s'engrène avec la rainure de dent à l'intérieur de la rainure de réglage (3312a, 4312a).

12. Véhicule tout-terrain (100) selon la revendication 11, dans lequel un bouton de réglage (4322a) et un bouton de fixation (4322b) sont disposés sur l'élément de fixation (1121c, 2323, 3322, 4322), et l'engrenage sur l'élément de fixation (1121c, 2323, 3322, 4322) tourne avec la rotation du bouton de réglage (4322a) ; le bouton de fixation (4322b) présente un état en saillie et un état pressé, lorsque le bouton de fixation (4322b) est dans l'état en saillie, à la fois le bouton de réglage (4322a) et l'engrenage sur l'élément de fixation (1121c, 2323, 3322, 4322) ne peuvent pas tourner, lorsque le bouton de fixation (4322b) est dans l'état pressé, le bouton de réglage (4322a) entraîne l'engrenage sur l'élément de fixation (1121c, 2323, 3322, 4322) en rotation.

13. Véhicule tout-terrain (100) selon l'une quelconque des revendications 1-12, dans lequel le support de protection (112) comprend un support de protection inférieur (1122) connecté de manière fixe au châssis principal (111), et le support de protection supérieur (1121, 232, 332, 432) est connecté rotativement au support de protection inférieur (1122).

14. Véhicule tout-terrain (100) selon l'une quelconque des revendications 4-12, lorsque le support de radiateur (113, 231, 331, 431) est dans l'état stationnaire, le radiateur (151) recouvre l'orifice d'accès (1211), et lorsque le support de radiateur (113, 231, 331, 431) est dans l'état réglable maximum, l'orifice d'accès (1211) peut être vu directement selon la direction de hauteur du véhicule tout-terrain (100).

15. Véhicule tout-terrain (100) selon l'une quelconque des revendications 1-12, dans lequel l'ensemble de radiateur (15) comprend en outre une protection de radiateur (152) et une grille d'admission d'air (153) positionnée sur la protection de radiateur (152), la protection de radiateur (152) est connectée de manière fixe au support de radiateur (113, 231, 331, 431), et la protection de radiateur (152) et la grille d'admission d'air (153) sont aptes à tourner ensemble avec le support de radiateur (113, 231, 331, 431).
